# EUROPÄISCHE PATENTSCHRIFT

(11) **EP 3 315 906 B1**
(45) Veröffentlichungstag und Bekanntmachung des Hinweises auf die Patenterteilung: **31.05.2023**
(21) Anmeldenummer: 16196050.5
(22) Anmeldetag: 27.10.2016
(51) Int. Cl.: G01C 15/00, G01S 17/42, G01S 17/89, G01S 7/48, G01S 7/51, G06T 9/00

(54) **VERFAHREN ZUR VERARBEITUNG VON SCANDATEN**
METHOD FOR PROCESSING SCAN DATA
PROCÉDÉ DE TRAITEMENT DES DONNÉES DE BALAYAGE

(43) Veröffentlichungstag der Anmeldung: 02.05.2018
(73) Patentinhaber: Leica Geosystems AG, 9435 Heerbrugg (CH)
(72) Erfinder: HERBST, Christoph, A-6850 Dornbirn (AT)
(74) Vertreter: Kaminski Harmann

(56) Entgegenhaltungen:
- EP-A1- 2 947 630
- EP-A1- 3 056 923
- US-A1- 2012 033 069

## Beschreibung

Die Erfindung betrifft ein Verfahren zur Verarbeitung von Scandaten nach dem Oberbegriff von Anspruch 1, sowie ein Vermessungssystem mit Scanfunktionalität nach dem Oberbegriff des Anspruchs 15.

3D-Scannen ist eine sehr wirkungsvolle Technologie um innerhalb von Minuten oder Sekunden Millionen von Einzelmessdaten, insbesondere 3D-Koordinaten, zu produzieren. Typische Messaufgaben sind die Aufnahme von Objekten bzw. deren Oberflächen wie Industrieanlagen, Häuserfassaden oder historischen Gebäuden aber auch von Unfallorten und Verbrechensszenen. Vermessungsgeräte mit Scanfunktionalität sind beispielsweise Totalstationen und Laserscanner wie der Leica P20 oder Leica Multi Station 50, welche verwendet werden, um 3D-Koordinaten von Oberflächen zu messen bzw. zu erstellen. Zu diesem Zweck müssen sie in der Lage sein, den Messstrahl -meist ein Laserstrahl- einer Entfernungsmessvorrichtung über eine Oberfläche zu führen und damit bei einer vorgegebenen Abtast- oder Messrate sukzessive zu verschiedenen Messrichtungen gleichzeitig Richtung und Entfernung zum jeweiligen Messpunkt zu erfassen. Richtung und Entfernung sind dabei bezogen auf einen Messbezugspunkt wie z.B. der Standort oder Nullpunkt des Vermessungsgeräts, liegen mit anderen Worten in einem gemeinsamen Bezugs- oder Koordinatensystem, so dass also die einzelnen Messrichtungen und damit die Einzelmessdaten über den gemeinsamem Messbezugspunkt miteinander verknüpft sind. Aus dem Entfernungsmesswert und der damit korrelierten Messrichtung für jeden Punkt kann somit anschliessend, insbesondere mittels einer externen Datenverarbeitungsanlage, aus der Vielzahl der gescannten Punkte eine sogenannte 3D-Punktwolke generiert werden.

Vom prinzipiellen Aufbau her sind derartige stationäre Scanner also ausgebildet, um mit einem, meist elektrooptischen und laserbasierten, Entfernungsmesser eine Distanz zu einem Objektpunkt als Messpunkt zu erfassen. Der Entfernungsmesser kann beispielsweise nach den Prinzipien der Time-Of-Flight- (TOF), Phasen-, Wave-Form-Digitizer-(WFD) oder interferometrischen Messung ausgeführt sein. Für schnelle und genaue Scanner ist insbesondere eine kurze Messzeit bei gleichzeitig hoher Messgenauigkeit gefordert, beispielsweise eine Distanzgenauigkeit im mm-Bereich oder darunter bei Messzeiten der Einzelpunkte im Bereich von Sub-Mikrosekunden bis Millisekunden. Die Messreichweite reicht dabei von wenigen Zentimetern bis hin zu einigen Kilometern.

Eine ebenfalls vorhandene Messrichtungs-Ablenkeinheit ist dabei derart ausgebildet, dass der Messstrahl des Entfernungsmessers in zumindest zwei unabhängige Raumrichtungen abgelenkt wird, die Messrichtung also fortlaufend verändert wird, wodurch ein (teil-)kugelförmiger räumlicher Mess- oder Scanbereich aufgenommen werden kann. Der Scanbereich beträgt dabei in der Horizontalen oft 360°, also ein Vollkreis, und in der Vertikalen z.B. 180°, so dass mindestens eine Halbkugel abgedeckt ist. Die Ablenkeinheit kann in Form eines bewegten Spiegels oder alternativ auch durch andere, zur gesteuerten Winkelablenkung von optischer Strahlung geeignete Elemente, wie beispielsweise verdrehbare Prismen, bewegliche Lichtleiter, verformbare optische Komponenten etc. realisiert werden. Die Messung erfolgt meist unter Bestimmung von Entfernung und Winkeln, also in Kugelkoordinaten, welche zur Darstellung und Weiterverarbeitung auch in kartesische Koordinaten transformiert werden können.

Die Scanauflösung, mit der der Scanbereich abgedeckt ist, ergibt sich dabei durch die Anzahl der Einzelmessdaten oder genauer Anzahl der gemessenen Punkte pro Raumbereich oder Kugelflächenelement. Die Scanauflösung bestimmt, welche Details noch erkannt werden können, aber auch die Dauer des Scanvorgangs und die dabei anfallende Datenmenge. Messprojekte mit modernen Hochgeschwindigkeitsscannern produzieren 3D-Punktwolken mit einer Mächtigkeit von beispielsweise mehreren Hundert Millionen oder mehreren Milliarden Objektpunkten und darüber hinaus. D.h. durch solche Scans fällt eine enorm grosse Datenmenge an, welche noch dadurch vergrössert wird, wenn wie es meist der Fall ist, neben den 3D-Koordinaten (also Distanz- und Richtungsinformation) noch weitere Daten als Teil des Scandatensatzes erfasst sind, wie z.B. mit einer zusätzlichen Kamera ermittelte Farbinformationen, Intensitätsdaten oder Rauschmasse. Das Speichern, Senden und Verarbeiten der damit einhergehenden enormen Datenmenge stellt grosse Herausforderungen an Hard- und Software und ist zeitintensiv. So erfordert z.B. der Transfer der Scandaten an ein externes Gerät wie ein Tablet oder Smartphone angesichts der Datenmenge besonders bei drahtloser Übertragung eine lange Zeit.

Ein solcher Transfer der Scandaten an ein externes Gerät ist in vielerlei Hinsicht vorteilhaft und aus dem Stand der Technik bekannt. So offenbart die DE 10 2013 102 554 A1 einen Laserscanner, der in einer Funkverbindung mit einem Netzwerk steht und mittels dieser Funkverbindung Scandaten an das Netzwerk übertragen kann, welche dann z.B. in einer Cloud gespeichert werden. Bei der Funkverbindung handelt es sich um eine schnelle, breitbandige und langreichweitige Art, vorzugsweise gemäss des LTE-Standards. Nachteilig hierbei ist, dass selbst bei einer solchen Funkverbindung der Transfer eines kompletten Scandatensatzes zeitintensiv ist. Zudem ist eine derartige schnelle und breitbandige Mobilfunkverbindung längst nicht überall verfügbar, so dass der Datentransfer oft noch erheblich länger dauert. Auch im Hinblick auf die begrenzte Batteriekapazität eines Laserscanners oder eines externen Geräts wie z.B. ein Smartphone sind lange Datenübertragungsdauern und damit Batteriebeanspruchung nachteilig.

Die EP 2 947 630 A1 offenbart ein Verfahren zum Verarbeiten von Scandaten, in dem eine Auswahl aus der ersten Anzahl von Einzelscandaten des aufgenommenen Scandatensatzes getroffen wird.

Die EP 3 056 923 A1 offenbart ebenfalls einen Laserscanner mit einer Funkverbindung und ein Verfahren, bei dem mittels dieser Funkverbindung die Scandaten mehrerer Scans der gleichen Messumgebung an einen externen Rechner übertragen werden. Gemäss der Offenbarung der EP 3 056 923 A1 wird durch den externen Rechner unter zu Hilfenahme von mittels einer GNSS-Einheit des Laserscanners bestimmter Standort- und Orientierungsdaten eine (Vor-)Registrierung der Scans zueinander vorgenommen. Die Datenübertragung erfolgt dabei z.B. per Funk, Bluetooth, WiFi-Verbindung oder Mobilfunk. Auch hier ist angesichts der enormen Datenmenge -vor allem angesichts der Tatsache, dass nicht nur der Datensatz eines Scans, sondern Datensätze mehrerer Scans zu übertragen sind- die Datenübertragung nachteilig sehr zeitintensiv bzw. nachteilig eine sehr schnelle Datenverbindung erforderlich, um die Übertragungszeit in verträglichen Grenzen zu halten. So gibt die EP 3 056 923 A1 selbst an, dass eine sehr schnelle WiFi-Verbindung von Vorteil ist.

Die US 2012/033069 A1 offenbart ein Verfahren zum Verarbeiten von Scandaten, in dem eine Auswahl aus der ersten Anzahl von Einzelscandaten des aufgenommenen Scandatensatzes von einer Steuer- und Auswerteeinheit des Vermessungsgeräts getroffen wird. Während der Auswahl werden die Einzelscandaten in Anzeigepunkten transformiert.

Aufgabe der vorliegenden Erfindung ist deshalb, ein verbessertes Verfahren zur zeitnahen Weiterverarbeitung von Scandaten bereitzustellen.

Eine weitere Aufgabe ist die Bereitstellung eines verbesserten Verfahrens zur Übertragung von Scandaten von einem noch im Feld stehenden Laserscanner an ein externes Gerät.

Eine weitere Aufgabe ist die Bereitstellung eines verbesserten Verfahrens zur Vernetzung eines oder mehrerer Laserscanner.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen sowie der Beschreibung einschliesslich der Figurenbeschreibungen zu entnehmen. Alle dargestellten oder in dieser Schrift anderweitig offenbarten Ausführungsformen der Erfindung sind miteinander kombinierbar, wenn nicht ausdrücklich anders festgestellt.

Die Erfindung betrifft ein Verfahren zum Verarbeiten von Scandaten. Im Rahmen des Verfahrens erfolgt ein Aufnehmen eines ersten, aufgenommenen Scandatensatzes mit einem, Vermessungsgerät mit Scanfunktionalität über einen definierten Objektoberflächen-Scanbereich. Das Vermessungsgerät ist vorzugsweise stationär und optional als Laserscanner oder Totalstation ausgebildet. Der Scanbereich umfasst optional in der Horizontalen 360° und in der Vertikalen etwa 270°. Der aufgenommene Scandatensatz weist eine erste Anzahl von Einzelscandaten mit einer ersten Scandatendichte auf. Die Einzelscandaten sind jeweils auf einen Punkt einer Objektoberfläche bezogen. D.h. je höher die Punktdichte ist, mit der eine bestimmte Objektoberfläche gescannt wird, desto höher sind auch die Anzahl der Einzelscandaten und damit die Scandatendichte.

Weiter umfasst das erfindungsgemässe Verfahren ein Erstellen eines verkleinerten Scandatensatzes mit einer zweiten, verkleinerten Anzahl von Einzelscandaten. Das Erstellen erfolgt, indem von einer (on-board-)Steuer- und Auswerteeinheit des Vermessungsgeräts eine Auswahl aus der ersten Anzahl von Einzelscandaten des aufgenommenen Scandatensatzes getroffen wird. Die Auswahl erfolgt dabei als Anpassung an eine vorbestimmte zweite, verkleinerte Scandatendichte, welche niedriger ist als die erste Scandatendichte. Erfindungsgemäss ist dabei die verkleinerte Scandatendichte abhängig von einer vorbestimmten Anzeigeauflösung zur visuellen Anzeige von Scandaten. Die Auflösung, mit der eine visuelle Darstellung der Scandaten erfolgt bzw. erfolgen soll, gibt also erfindungsgemäss die verkleinerte Scandatendichte vor, die wiederum als Richtgrösse für die Verkleinerung des aufgenommenen Scandatensatzes dient, so dass also zumindest indirekt der Umfang des verkleinerten Scandatensatz durch die vorbestimmte Anzeigenauflösung vorgegeben wird. Die verkleinerte oder auch die erste, aufgenommene Scandatendichte müssen hierzu nicht als explizite Werte vorliegen oder bestimmt werden, sondern können lediglich implizit, z.B. durch die Anzahl der aufgenommenen Einzelscandaten oder die vorbestimmte Anzeigeauflösung, gegeben sein. Unter Auswahl von Einzelscandaten ist dabei auch zu verstehen, dass die jeweiligen zu übernehmenden Einzelscandaten nicht komplett in den verkleinerten Scandatensatz übernommen werden, sondern nur Datenteile, was z.B. der Fall sein kann, wenn die Einzelscandaten des aufgenommenen Scandatensatzes neben dem 3D-Koordinaten (bzw. den Entfernungs- und Richtungswerten) noch weitere Scandaten aufweisen (z.B. Intensitätswerte oder Farbinformationen) und diese nicht dargestellt werden sollen. Dann werden z.B. nur die 3D-Koordinaten bzw. die Entfernungs- und Richtungswerte als Einzelscandaten übernommen, wodurch im Vergleich zu einer vollen Einzelscandatenübernahme Datenvolumen eingespart wird. Optional ist die verkleinerte Anzahl der Einzelscandaten gleich der Anzahl der Pixel der vorbestimmten Anzeigeauflösung und/oder beträgt höchsten die Hälfte, z.B. höchsten eins Viertel oder ein Zehntel der ersten Anzahl der Einzelscandaten.

Weiter erfolgt im Rahmen des Verfahrens ein Übermitteln des verkleinerten Scandatensatzes vom Vermessungsgerät an ein externes Datenverarbeitungsgerät. Beim externen Datenverarbeitungsgerät handelt es sich z.B. um ein Tablet, Feldkontroller oder Smartphone, oder einen Desktop-PC. Das Übermitteln erfolgt vorzugsweise drahtlos, z.B. per WiFi, Bluetooth oder Funk, insbesondere dann, wenn sich das Datenverarbeitungsgerät nicht in unmittelbarer Nähe zum Vermessungsgerät befindet.

Auf einem Display des externen Datenverarbeitungsgeräts erfolgt weiterhin ein visuelles Anzeigen des verkleinerten Scandatensatzes oder Teilen davon mit der vorbestimmten Anzeigeauflösung oder einer daraus abgeleiteten, beispielsweise halb so grossen, Anzeigeauflösung. Durch das auf die Anzeigeauflösung abgestimmte Erstellen eines verkleinerten Scandatensatzes werden also genau diejenigen Einzelscandaten an das externe Gerät übermittelt, welche zur visuellen Darstellung mit der gewünschten Anzeigeauflösung erforderlich sind. Ein hinsichtlich der Visualisierung unnötiges Datenvolumen wird gezielt eingespart, was vorteilhaft hinsichtlich der Datenübertragung und auch Datenvisualisierung ist. Hierbei werden durch die Übermittlung eines Satzes an Scandaten erfindungsgemäss nicht nur reine Darstellungsdaten übermittelt, welche lediglich ein Bild darstellen, sondern es sind beim externen Datenverarbeitungsgerät Messdaten vorhanden (z.B. Punktkoordinaten oder Entfernungsmesswerte, Intensität, Farbe), welche beispielsweise eine Auswertung und/oder Bearbeitung von Scandaten oder auch eine Erzeugung einer 3D-Punktwolke erlauben. Für viele Weiterverarbeitungs- oder Auswertungsschritte der aufgenommene Scandaten wird bei Weitem nicht die ganze Fülle oder Dichte der Einzelscandaten benötigt. Oftmals ist -zumindest für eine vorläufige oder grobe Bearbeitung oder Auswertung der Scandaten- eine Art ausgedünnter oder grober Scandatensatz, wie es der verkleinerte Scandatensatz darstellt, völlig ausreichend. Zudem wird dabei der Rechenaufwand vermindert, da bei der Darstellung und/oder Auswertung oder Bearbeitung nicht mehr alle aufgenommenen Einzelscandaten berücksichtigt werden müssen.

Als besonders vorteilhafte Option erfolgen das Erstellen des verkleinerten Scandatensatzes und dessen Übermitteln zeitnah an das Aufnehmen, vorzugsweise unmittelbar nach Abschluss der Aufnahme des aufgenommenen Scandatensatzes oder in Echtzeit bereits während der Aufnahme für bereits aufgenommene Scandaten, so dass praktisch ohne Zeitverlust am externen Datenverarbeitungsgerät ein (zumindest grobes) visualisierbares Ergebnis des Scans vorliegt.

Z.B. erfolgt als Option anhand des übermittelten verkleinerten Scandatensatzes und mittels des externen Datenverarbeitungsgeräts eine zeitnahe Auswertung des Scandatensatzes, vorzugsweise eine Kontrolle auf Vollständigkeit und/oder Fehler, wobei bei Vorliegen von Unvollständigkeit und/oder Fehlerhaftigkeit ein zeitnahes Ergänzen und/oder Ausbessern des aufgenommenen oder verkleinerten Scandatensatzes durch ein weiteres Aufnehmen von Einzelscandaten mit dem Vermessungsgerät erfolgt. Alternativ oder zusätzlich werden im Rahmen der Auswertung Regions of Interest ermittelt und es erfolgt zeitnah ein Ergänzen des aufgenommenen oder verkleinerten Scandatensatzes durch ein weiteres Aufnehmen mit dem Vermessungsgerät von Einzelscandaten von Objektoberflächen der Regions of Interest mit einer dritten, erhöhten Scandatendichte. Das erfindungsgemäss Verfahren ermöglicht also vorteilhaft eine rasche und unmittelbare Behebung von Mängeln des Scans und/oder dessen Verbesserung oder Optimierung durch gezieltes Nachscannen.

In einer Fortbildung des erfindungsgemässen Verfahrens erfolgt ein Bearbeiten des übermittelten verkleinerten Scandatensatzes mittels des externen Datenverarbeitungsgeräts, so dass sich ein bearbeiteter Scandatensatz ergibt. Optional erfolgt ein Bearbeiten (quasi) simultan und/oder ortsverschieden, z.B. teils am Vermessungsort, teils in einem Büro, auf mehreren externen Datenverarbeitungsgeräten, wozu der verkleinerte Scandatensatz zuvor an mehrere solche Geräte übermittelt wurde. Vorzugsweise erfolgt im Rahmen des Bearbeitens ein Einfügen von Metadaten, wobei es sich bei den Metadaten beispielsweise um Texte, Bilder, Voice-Memos, CAD-Daten, Punktkoordinaten oder eine aus wenigstens zwei Einzelmessdaten abgeleitete Grösse, wie z.B. eine Länge, Fläche oder ein Volumen, handelt. Der bearbeitete Scandatensatz wird vollständig oder auch nur in seinen bearbeiteten, beispielsweise veränderten oder ergänzten, Teilen an das Vermessungsgerät rückübermittelt (vorzugsweise drahtlos) und anhand dessen erfolgt ein Ergänzen oder Anpassen des in einem Speicher des Vermessungsgeräts vorgehaltenen aufgenommenen oder verkleinerten Scandatensatzes. Als Option wird der rückübermittelte bearbeitete Scandatensatz oder seine rückübermittelten Teile bei der Darstellung von Scandaten durch eine Anzeigeeinheit des Vermessungsgeräts berücksichtigt, z.B. indem eingefügte Metadaten zusammen mit den Einzelscandaten angezeigt werden, also beispielsweise indem Texte oder Bilder in einer Visualisierung des Scans auf einem Display des Laserscanners automatisch nach Erhalt aufpoppen.

In einer weiteren Fortbildung erfolgt ein Übermitteln von wenigstens zwei unterschiedlichen Scandatensätzen mit sich überlappenden Scanbereichen, also von mindestens zwei Scandatensätzen, welche zumindest teilweise unterschiedliche Bereiche der Scanumgebung abbilden. Mittels des Datenverarbeitungsgeräts erfolgt weiter ein Verknüpfen der Scandatensätze miteinander, vorzugsweise ein Grobausrichten der Scandatensätze, so dass deren Punktkoordinaten in einem gemeinsamen Koordinatensystem eingeschrieben sind. Optional erfolgt das Verknüpfen manuell anhand der visuellen Anzeige, beispielsweise durch Markieren von Anzeigepunkten (in der Anzeige beider Scandatensätze gemeinsame Punkte) und/oder Anzeigebereichen (übereinstimmende Bereiche beider Scandatendsätze) auf einer darstellenden Anzeigeeinheit. Alternativ oder zusätzlich erfolgt das Verknüpfen automatisch durch Heranziehung zusätzlicher Positionsdaten, welche von einem Positionsmesser, z.B. einer IMU, GPS-Empfänger und/oder Videotracker, des Vermessungsgeräts bereitgestellt sind. Als weitere Option erfolgt anschliessend eine visuelle Anzeige der verknüpften Scandatensätze auf einem Display, z.B. eine Ansicht des gesamten durch beide oder alle Scandatensätze repräsentierten Umgebung. Dieses Anzeigen dient z.B. der visuellen Kontrolle der Grobausrichtung, um etwaige Fehler feststellen zu können.

Das externe Datenverarbeitungsgerät ist ausgebildet beispielsweise als handhaltbares Gerät, z.B. als Feldrechner, Tablet oder Smartphone, wobei sich das handhaltbare Gerät bei der Durchführung des Verfahrens vor Ort befindet. In diesem Fall erfolgt die Datenübermittlung zwischen dem Vermessungsgerät und dem externen Gerät optional mittels WiFi, WLAN und/oder Bluetooth. Alternativ oder zusätzlich ist das externe Gerät ausgebildet als Office-Rechner, also Computer zur stationären Verwendung, welcher sich räumlich getrennt vom Vermessungsgerät befindet. In diesem Fall erfolgt optional die Datenübermittlung zwischen dem Vermessungsgerät und dem Office-Rechner, indem ein Feldrechner, Tablet oder Smartphone als (Daten-)Relaisstation zwischengeschaltet ist. Unabhängig von der Art des externen Datenverarbeitungsgeräts werden als Option vom externen Datenverarbeitungsgerät Steuersignale an das Vermessungsgerät übermittelt, wobei auch eine vollständige Fernsteuerung des Vermessungsgeräts durch das externe Datenverarbeitungsgerät erfolgen kann.

Das Anzeigen der einzelnen Scans erfolgt optional als Panoramadarstellung, vorzugsweise als Würfeldarstellung (cube view), welche eine Rundumansicht des Scans ermöglicht. Das Anzeigen erfolgt als weitere Option mittels einer mit dem verkleinerten Scandatensatz verknüpften image map, vorzugsweise einer cube map, mit einer von einer vorbestimmten Anzeigeauflösung abhängigen Anzahl von map-Punkten. Optional wird die image map erzeugt, indem mittels einer Zuordnungsvorschrift eine Zuordnung von ausgewählten Einzelscandaten zu einem map-Punkt erfolgt, wobei die verkleinerte Anzahl von Einzelscandaten der Anzahl der map-Punkte entspricht. In einer speziellen vorteilhaften Fortbildung erfolgt die Zuordnung unmittelbar anhand jeweiliger mit den jeweiligen Einzelscandaten verknüpfter Scanrichtungen, was eine einfache, schnelle und direkte Erzeugung der image map ermöglicht. Weiter ist optional die Zuordnung als Look-Up-Tabelle ausgebildet, in der für die jeweiligen map-Punkte direkt die jeweiligen Einzelscandaten abrufbar sind, was einen besonders unmittelbaren und schnellen Datenzugriff erlaubt.

In einer Fortbildung des Verfahrens wird neben dem verkleinerten Scandatensatz zusätzliche scandatenbezogene Bildinformation vom Vermessungsgerät erstellt und an das externe Datenverarbeitungsgerät übermittelt. Bei der scandatenbezogenen Bildinformation handelt es sich z.B. eine image map, die anhand eines aufgenommenen oder verkleinerten Scandatensatzes erstellt wird und zur Visualisierung des Scans dient, z.B. durch eine Anordnung von map-Punkten mit einem zugeordneten Helligkeits- oder Farbwert. Der Vorteil der reinen Bildinformation gegenüber einem Scandatensatz ist ihr vergleichsweise geringes Datenvolumen, was eine schnelle Datenübermittlung erlaubt. Diese Vorgehensweise kann z.B. vorteilhaft dazu benutzt werden, um mit der Bildinformation ein Abbild des aufgenommenen Scandatensatzes zu erstellen, welches eine visuelle Darstellung mit einer höheren Anzeigeauflösung als diejenige des übermittelten verkleinerten Scandatensatzes ermöglicht, wobei die reine Bildinformation - da ja keine eigentlichen Scandaten übermittelt sind- nur eine Visualisierung erlaubt, jedoch keine Scandatenauswertung oder -bearbeitung von Scandaten erlaubt (abgesehen natürlich von einer "visuellen" Auswertung des Bildes, z.B. zur Kontrolle auf Scanlücken). Damit kann der Benutzer des externen Geräts z.B. zwischen beiden Darstellungsweisen - höherauflösend, jedoch nicht auswertbar, und niedrigauflösend und auswertbar- umschalten. Alternativ erfolgt ein kombiniertes Anzeigen der Bildinformation und des verkleinerten Scandatensatzes, so dass z.B. die meisten Pixel abhängig von der reinen Bildinformation angezeigt werden und zwischen diesen Pixeln verteilt Pixel angeordnet sind, die abhängig vom verkleinerten Scandatensatz angezeigt werden und mittels derer im Gegensatz zu den restlichen Pixeln Scandaten, z.B. Entfernungswerte, echt abrufbar sind. Optional erfolgt auf Nachfrage durch das externe Gerät (bzw. dessen Benutzer) ein instantanes Übermitteln von Einzelscandaten, welche mit einer Bildinformation, z.B. einem image-map-Punkt verknüpft sind. Will der Benutzer z.B. die 3D-Koordinaten eines angezeigten Punkts wissen, markiert er diesen, wodurch eine gezielte Anforderung von zum Punkt gehörigen Scandaten an das Vermessungsgerät übermittelt wird, worauf diese Scandaten an das externe Gerät übermittelt werden.

In einer weiteren Variante des Verfahrens werden bei der Auswahl von Einzelscandaten systematische Gerätefehler des Vermessungsgeräts berücksichtigt, so dass der verkleinerte Scandatensatz gerätefehlerkorrigiert, vorzugsweise weitgehend gerätefehlerfrei, ist. Bei den Gerätefehlern handelt es sich beispielsweise um Achsenfehler und/oder solche, welche Winkelmessungen zum Bestimmen der Messrichtungen betreffen. Dabei sind optional die systematischen Gerätefehler für das Vermessungsgerät individuell mittels eines Kalibriervorgangs in Form von Kalibrierparametern bestimmt sind und die Gerätefehler werden bei der Auswahl der Einzelscandaten anhand der Kalibrierparameter berücksichtigt werden.

In einer weiteren Fortbildung werden bei der Auswahl von Einzelscandaten Qualitätskriterien berücksichtigt, so dass Einzelscandaten mit einer vergleichsweise hohen Qualität, z.B. Einzelscandaten mit Messwerten mit einem vergleichsweise guten Signal-Rausch-Verhältnis, bevorzugt ausgewählt. Hierdurch wird vorteilhaft vermieden, dass besonders hochwertige Scandaten nicht übermittelt werden. Das Berücksichtigen umfasst optional, dass der Scanbereich in eine Anzahl von Teilbereiche aufgeteilt wird, wobei die Anzahl der Teilbereiche der verkleinerten Anzahl der Einzelscandaten entspricht und jeweils diejenigen Einzelscandaten ausgewählt werden, welche innerhalb jeweiliger Teilbereiche im Vergleich mit den weiteren Einzelscandaten der jeweiligen Teilbereiche die höchste Qualität aufweisen.

Alternativ oder zusätzlich wird bei der Auswahl der Einzelscandaten ein Informationsgehalt der jeweiligen Einzelscandaten berücksichtigt, beispielsweise indem Einzelscandaten mit hohem Informationsgehalt, z.B. oberhalb eines definierten Informationsgehaltschwellenwerts, in jedem Fall in den verkleinerte Scandatensatz übernommen werden, und/oder indem eine Unterscheidung von Bereichen hinsichtlich des Informationsgehaltes der Einzelscandaten des jeweiligen Bereichs erfolgt und die Auswahl von Einzelscandaten dergestalt erfolgt, dass die verkleinerte Scandatendichte in Bereichen mit hohem Informationsgehalt vergleichsweise hoch ist, z.B. unverändert gleich der ersten Scandatendichte ist, und in Bereichen mit niedrigem Informationsgehalt vergleichsweise niedrig ist. Damit wird vermieden, dass Scandaten, die einen wesentlichen Zugewinn an Informationen über die Objektoberflächen bedeuten, nicht in den verkleinerten Scandatensatz aufgenommen werden, wie es z.B. bei einem "sturen" abzählenden Auswählen (die jeweiligen dritten Einzelscandaten werden ausgewählt) der Fall sein kann.

Als weitere Weiterbildung des erfindungsgemässen Verfahrens erfolgt die Auswahl der Einzelscandaten glättend, so dass eine ungleichmässige Verteilung der Punkte der Objektoberfläche korrigiert wird. Während also z.B. der aufgenommene Scandatensatz je nach dem sehr unterschiedliche Punktdichten ergibt (z.B. mit unnötig hohen Punktdichten von Oberflächen, welche wenig strukturiert oder in sich wenig relevant sind), weist dann der verkleinerte Scandatensatz eine Scandatenauswahl auf, welche eine gleichmässige oder zumindest gleichförmigere Punktdichte ergibt. Dies wird z.B. erreicht, indem bei der Auswahl der Einzelscandaten ein Abstand der zu den jeweiligen Einzelscandaten gehörigen Punkte zueinander berücksichtigt wird.

Die vorliegende Erfindung beinhaltet des Weiteren ein Computerprogrammprodukt, das auf einem maschinenlesbaren Träger gespeichert ist, oder Computer-Datensignal, verkörpert durch eine elektromagnetische Welle, mit Programmcode, zur Steuerung bzw. Durchführung des erfindungsgemässen Verfahrens.

Die vorliegende Erfindung betrifft ausserdem ein Vermessungssystem mit Scanfunktionalität und einem zum Vermessungsgerät externen Datenverarbeitungsgerät, insbesondere mit einem als Laserscanner oder Totalstation ausgebildeten Vermessungsgerät. Das Vermessungssystem ist erfindungsgemäss zur Ausführung des erfindungsgemässen Verfahrens ausgebildet, beispielsweise durch eine entsprechende Steuer- und Auswerteeinheit des Vermessungsgerät, welche die Schritte Aufnehmen, Erstellen und Übermitteln durchführt bzw. steuert, und ein Datenverarbeitungsgerät, welches ausgebildet ist zum Übermitteln (Empfangen) der Scandaten und deren Visualisierung.

Das erfindungsgemässe Verfahren und die erfindungsgemässe Vorrichtung werden nachfolgend anhand von den in den Zeichnungen schematisch dargestellten Ausführungen und Anwendungsvorgängen näher beschrieben.

Im Einzelnen zeigen
- Fig. 1: ein Vermessungssystem,
- Fig. 2: einen Ausschnitt aus dem Vermessungsgerät und der aufgenommenen Objektoberfläche,
- Fig. 3: schematisch ein Prinzip des erfindungsgemässen Verfahrens,
- Fig. 4: ein schematisches Beispiel für eine Form des visuellen Anzeigens,
- Fig. 5: ein Erstellen eines verkleinerten Scandatensatzes,
- Fig. 6a-c: schematisch eine weitere Fortbildung des erfindungsgemässen Verfahrens,
- Fig. 7: schematisch eine weitere Fortbildung des erfindungsgemässen Verfahrens,
- Fig. 8: schematisch eine weitere Fortbildung des erfindungsgemässen Verfahrens, und
- Fig. 9: schematisch eine weitere Fortbildung des erfindungsgemässen Verfahrens.

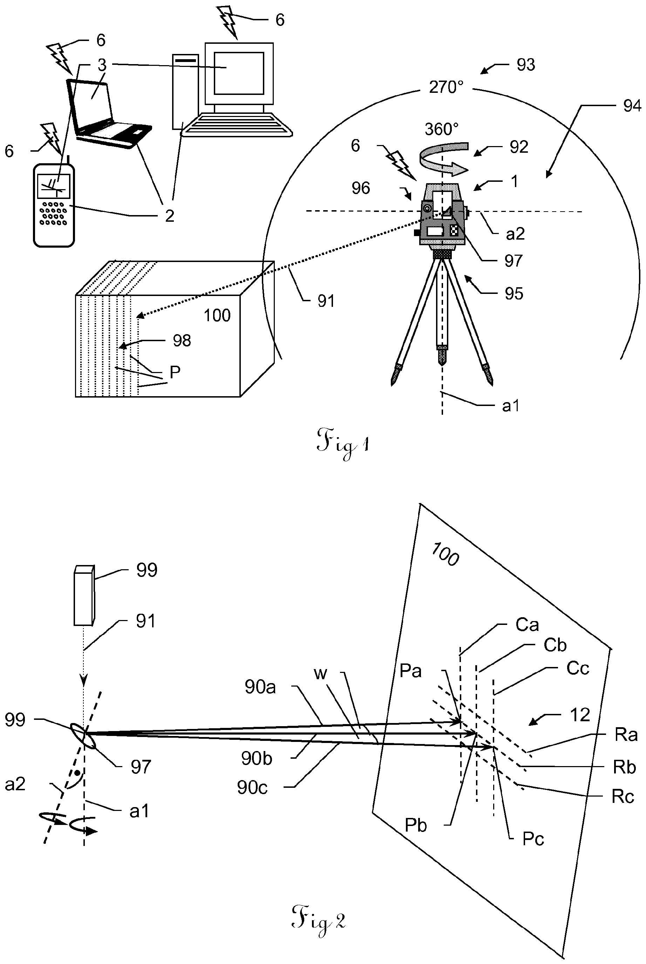

Figur 1 zeigt ein stationäres Vermessungsgerät 1 mit Scanfunktionalität zum Aufnehmen von Objektoberflächen 100, z.B. ausgebildet als Laserscanner. Hierbei ist das Gerät 1 ausgebildet zum Aussenden von Messstrahlung 91 gemäss einer bestimmten Messrichtung, Empfang von von der Oberfläche 100 reflektierter Messstrahlung 91 und deren Auswertung, z.B. mittels Laufzeit- oder Phasendifferenzverfahren. Zum scannenden Abtasten einer Objektoberfläche 100 wird die Messstrahlung 91 fortlaufend verschwenkt und sukzessive in kurzen Zeitabständen jeweils wenigstens ein Messwert aufgenommen, darunter jedenfalls eine Entfernung zum jeweiligen Objektpunkt P, so dass eine Vielzahl von Messrichtungen vorliegt sind, welche jeweils z.B. über Winkelsensoren gemessen werden, wobei für jeweils ein Messrichtung ein Punkt vermessen wird und so eine Vielzahl von Punkten 98 der Objektoberfläche 100 gemessen wird. Entsprechend der Vielzahl der Punkte 98 bzw. der Einzelmessvorgänge liegt somit eine Vielzahl von Einzelscandaten vor, die untereinander verbunden sind und einen ersten Scandatensatz bilden. Der erste Scandatensatz kann dabei neben den 3D-Koordinaten der Punkte 98 bzw. der Entfernungs- und Richtungsmesswerte weitere Daten aufweisen, z.B. Intensität oder Helligkeit der Messstrahlung, Rauschmass, Daten zur Messgenauigkeit oder zur Datendichte, oder Farbinformation, welche mit einer Kamera des Vermessungsgeräts 1 (nicht dargestellt) ermittelt sind.

Das Vermessungsgerät 1 ist ausgebildet, um ein Übermitteln 6 von (Scan-)Daten an ein externes Datenverarbeitungsgerät 2, z.B. ein handhaltbares Gerät wie ein Smartphone, FieldController, Tablet, oder ein Desktop-Computer durchzuführen. Das Datenverarbeitungsgerät 2 weist ein Display 3 auf, welches Daten mit einer bestimmten Anzeigeauflösung darstellen kann, und befindet sich dabei entweder vor Ort, also in der Nähe des Vermessungsgeräts 1 oder entfernt davon, z.B. in einem Büro. Das Übermitteln erfolgt dabei wie dargestellt vorzugsweise drahtlos. Je nach dem, ob sich dass Vermessungsgerät vor Ort befindet oder räumlich weit getrennt von der Stelle des Scannens, ist auch die Art der drahtlosen Übertragung gewählt, beispielsweise wird im Nahbereich per Bluetooth oder WLAN übermittelt und im Fernbereich per Funkverbindung oder Mobilfunknetz. Für die Übermittlung 6 im Fernbereich, z.B. an einen Office-Rechner, wird optional ein weiteres externes Gerät mit Datenübermittlungsfunktionalität zwischengeschaltet. Beispielsweise funktioniert ein Tablet oder Smartphone, welches sich vor Ort befindet als Relaisstation, indem es den verkleinerten Scandatensatz vom Vermessungsgerät z.B. per Bluetooth, empfängt und diese Scandaten, z.B. über ein Mobilfunknetz, an den Office-Rechner weiterleitet. Vorzugsweise ist die Verbindung zwischen Vermessungsgerät 1 und Datenverarbeitungsgerät 2 beidseitig, so dass auch Daten z.B. vom Feldrechner 2 an das Vermessungsgerät 1 übermittelbar sind und z.B. auch das Vermessungsgerät 1 mittels des Feldrechners 2 fernsteuerbar ist.

Zum Scannen erfolgt das erwähnte Verschwenken wie dargestellt beispielsweise, indem ein Oberteil 96 des Vermessungsgeräts 1 gegenüber einer Basis -relativ langsamum eine erste, vertikale Achse a1 schrittweise oder kontinuierlich rotiert wird, so dass die Messstrahlung 91 in der Horizontalen verschwenkt wird, und indem ein verschwenkbares optisches Bauteil 97, z.B. ein Schwenkspiegel, -relativ schnell- um eine horizontale Achse a2 rotiert wird, so dass die Messstrahlung 91 in der Vertikalen verschwenkt wird. Dadurch wird die Objektoberfläche 100 z.B. mit einem Linienraster wie dargestellt mit einer vorbestimmten Punktdichte oder Scanauflösung 98 gescannt. Das Scannen erfolgt dabei innerhalb eines vorbestimmten Scanbereichs 94, dessen Grenzen durch den horizontale und vertikale Verschenkungsbreite festgelegt ist. Somit ergibt sich je nach gewählter oder vorbestimmter Scanauflösung eine erste Anzahl an Einzelscandaten und bezogen auf den Scanbereich eine erste Scandatendichte, die ein Mass dafür darstellt, wie engmaschig der Scanbereich gescannt ist. Je höher die Scandatendichte für einen definierten Scanbereich ist, desto mächtiger ist der Scandatensatz und desto grösser ist das Datenvolumen.

Bevorzugt beträgt dabei der Scanbereich 94 in der Horizontalen 360°, also eine vollständige Umdrehung um die vertikale Achse a1, und in der Vertikalen z.B. 270°, so dass ein kugelförmiger Scanbereich 94 vorliegt, welcher beinahe den gesamten Umgebungsbereich in alle Raumrichtungen abbildet. Es sind aber auch beliebige andere Scanbereiche 94 möglich.

Figur 2 zeigt einen Ausschnitt aus dem Vermessungsgerät und der Objektoberfläche 100. Von einer Messeinheit 99, welche eine Messstrahlungsquelle, z.B. eine Laserdiode oder eine SLED, und einen Messstrahlungsdetektor aufweist, wird Messstrahlung 91 emittiert und mittels eines optischen Umlenkelements 97, welches im Beispiel um zwei zueinander orthogonale Achsen a1 und a2 drehbar ist, auf die Objektoberfläche 100 gelenkt. Durch gezieltes Bewegen der Umlenkoptik 97 wird die Messstrahlung 91 über die Objektoberfläche 100 verschwenkt. Durch gleichschrittiges Erfassen von Einzelscandaten durch die Messeinheit 99 sind Messrichtungen 90a, 90b, 90c festgelegt, welche vom gleichen Messbezugspunkt 99 ausgehen und zumindest idealerweise gleichen Winkelabstand zueinander aufweisen (im Beispiel ist der horizontale Winkelabstand w eingezeichnet). Zu einer jeweiligen Messrichtung 90a-c ist also je wenigstens ein Messwert erfasst und mit der jeweiligen Messrichtung 90a-c verknüpft und die Einzelscandaten sind jeweils auf einen Objektpunkt Pa-Pc bezogen. Die Einzelscandaten beinhalten dabei jeweils wenigstens als einen Messwert jedenfalls einen Entfernungsmesswert zu einem Punkt Pa, Pb, Pc der Objektoberfläche 100, welcher durch Auswertung von mit dem Messstrahlungsdetektor detektierter reflektierter Messstrahlung 91 bestimmt ist. Durch Verknüpfung jeweils von Entfernung mit Scanrichtung 90a-90c, bezogen auf den gemeinsame Messbezugspunkt 99, zu einer Vielzahl von Punkten ist aus dem Scandatensatz eine die Objektoberfläche 100 repräsentierende 3D-Punktwolke generierbar.

Durch eine im Idealfall gleichmässige, gleichschrittige Aufnahme von Einzelmessdaten wird durch die Messrichtungen 90a-c ein regelmässiges Raster 12 gebildet, welchem Zeilen Ra, Rb, Rc und Spalten Ca, Cb, Cc zugeordnet werden. Entsprechend werden die Einzelscandaten in einer Matrix organisiert, d.h. in einer Tabelle mit Spalten- und Zeilenindex verwaltet. Je engmaschiger dabei das Raster 12 ist, mit dem die Objektoberfläche 100 abgetastet wird, desto höher ist die erste Scandatendichte.

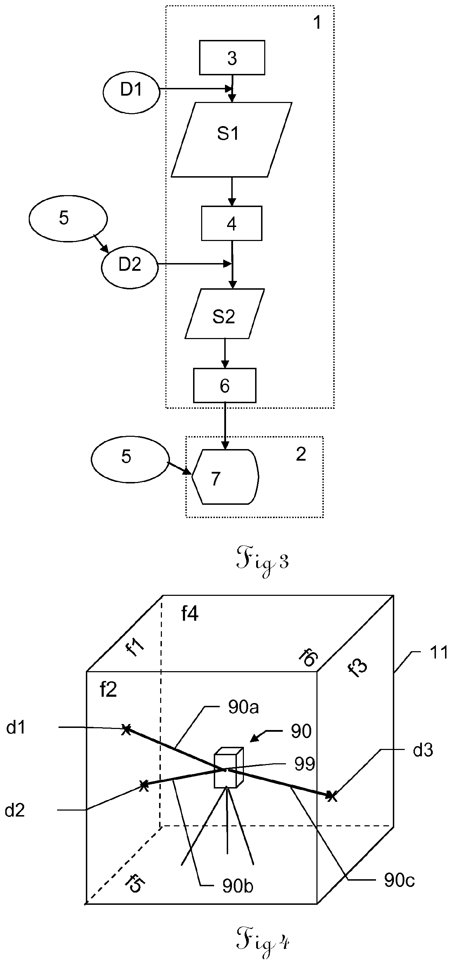

Figur 3 zeigt schematisch den Ablauf des erfindungsgemässen Verfahrens. Mit dem Vermessungsgerät 1 erfolgt ein Aufnehmen 3 der Objektoberflächen innerhalb des Scanbereichs, wodurch sich der erste, aufgenommene Scandatensatz S1 ergibt, welcher eine erste Anzahl von Einzelscandaten mit einer ersten Scandatendichte D1 aufweist. Anschliessend (oder auch bereits während des Scannens 2) erfolgt ein Erstellen 4 eines verkleinerten Scandatensatzes S2 durch Auswahl von Einzelscandaten des ersten Scandatensatzes S1. Die Auswahl erfolgt dabei so, dass der zweite, verkleinerte Scandatensatz S2 eine zweite Anzahl an Einzelscandaten mit einer Scandatendichte D2 aufweist, welche kleiner ist als die erste Scandatendichte D1 und von einer Anzeigeauflösung 5 abhängt. Die Anzeigeauflösung 5 ist eine Auflösung, mit der der Scandatensatz S2 visuell dargestellt werden soll bzw. kann. Anschliessend (oder bereits während des Erstellens 4) erfolgt ein Übermitteln 6 des verkleinerten Scandatensatzes S2 an das externe Datenverarbeitungsgerät 2. Anschliessend (oder bereits während des Übermittelns 6) erfolgt ein visuelles Anzeigen 7 des verkleinerten Scandatensatzes S2 (oder von Teilen davon) auf dem Display des Datenverarbeitungsgeräts 2, wobei das Anzeigen 7 mit der Anzeigeauflösung 5 erfolgt (oder mit einer daraus abgeleiteten, z.B. geringeren Anzeigeauflösung). Vorzugsweise erfolgt also das Erstellen 4, das Übermitteln 6 und das Anzeigen 7 zeitnah an das Scannen.

Durch das Auswählen von Einzelscandaten des aufgenommenen Scandatensatzes S1, d.h. durch die Tatsache, dass nur ein Teil der Einzelscandaten übernommen wird, ist die Mächtigkeit des verkleinerten Scandatensatzes S2 und damit sein Datenvolumen im Vergleich zum aufgenommenen Scandatensatz S1 verringert. Erfolgt z.B. ein Übernehmen nur der Hälfte oder eines Zehntel der Einzelscandaten, ergibt sich ca. ein Datenvolumen, das nur die Hälfte oder ein Zehntel des ursprünglichen beträgt. Welcher Anteil der Einzelscandaten dabei übernommen wird, hängt erfindungsgemäss von der vorbestimmten Anzeigeauflösung 5 ab. Je höher diese ist, d.h. je grösser die Anzahl der darzustellenden Pixel ist, desto grösser ist auch die zweite Anzahl der Einzelscandaten (wobei diese jedenfalls kleiner ist als die erste Anzahl von Einzelscandaten) und die verkleinerte Scandatendichte D2. Dabei ist es nicht zwangsweise erforderlich, dass die Scandatendichten S1,S2 als explizite Werte ermittelt oder vorgegeben werden. Vielmehr liegen diese jedenfalls implizit vor als Eigenschaft der jeweiligen Scandatensätze S1, S2 bzw. die verkleinerte Scandatendichte S2 ergibt sich implizit aus der vorbestimmten Anzeigeauflösung 5 (und damit Pixelanzahl) und dem vorgegebenen Scanbereich (und damit Scanvolumen) .

Da die beabsichtigte Anzeigeauflösung 5, mit der die Anzeige 7 der Scandaten erfolgen soll, als Richtschnur für das Ausdünnen des aufgenommenen Scandatensatzes S2 dient, ergibt sich mit dem erfindungsgemässen Verfahren jedenfalls keine Verschlechterung der visuellen Darstellung des Scandatensatzes. Hinsichtlich der Visualisierung des Scans mit der gewünschten Auflösung sind die nicht in den verkleinerten übernommenen Einzelscandaten sozusagen unnötiges Datenvolumen, da der aufgenommene Scandatensatz eine erste Scandatendichte S1 aufweist, welche sowieso nicht in dieser Feinheit auf dem Display des Datenverarbeitungsgeräts 2 darstellbar ist. Somit nimmt das erfindungsgemässe Verfahren eine Vergröberung vorweg, die gewissermassen sowieso in Bezug auf das Scandatendarstellen in der Regel erfolgt. Im Unterschied zu Stand der Technik erfolgt dabei die Vergröberung nicht erst im Zuge des Anzeigens durch das externe Anzeigegerät 2, sondern bereits im Vermessungsgerät vor dem Übermitteln 6 an das Anzeigegerät 2, so dass das bez. des Anzeigens 7 unnötige Datenvolumen erst gar nicht übertragen werden muss, was vorteilhaft bei gegebener Datenübertragungsrate Zeit spart oder eine geringere Datenübertragungsrate ermöglicht, ohne dabei zeitlichen Mehraufwand in Kauf nehmen zu müssen.

Figur 4 zeigt ein schematisches Beispiel für eine Form des visuellen Anzeigens des verkleinerten Scandatensatzes. Die Darstellung erfolgt mittels einer als cube map ausgebildeten image map 11 als Würfeldarstellung. Das Zentrum des Würfels ist dabei identisch mit dem Messbezugspunkt 99, so dass das Vermessungsgerät 1 als im Zentrum des Würfels stehend angesehen werden kann. Die cube map 11 weist dabei eine Anzahl von map-Punkten (Pixel) auf, wovon beispielhaft drei Punkte d1, d2 und d3 dargestellt sind, welche sich auf drei verschiedenen der sechs Würfelseiten f1-f6 befinden. Die Anzahl der Punkte d1-d3 einer image map 11 ist dabei abhängig von der vorbestimmten Anzeigeauflösung, die wiederum abhängig sein kann von der beabsichtigten Anzeigeeinheit. D.h. je grösser die Anzeigeauflösung desto grösser ist die Anzahl der Punkt der cube map 11 und desto höher ist die Anzeigepunktedichte pro Würfelfläche f1-f6.

Die Auswahl der Einzelscandaten aus dem aufgenommenen Scandatensatz erfolgt nun so, dass die verkleinerte Anzahl der Einzelscandaten gleich der map-Punkte-Anzahl ist. Dabei erfolgt die Auswahl der Einzelscandaten bzw. eine Zuordnung von darzustellenden Einzelscandaten zu map-Punkten beispielsweise unmittelbar anhand der Messrichtung. Beispielhaft ist dies anhand der drei map-Punkt d1-d3 dargestellt: dem Punkt d1 ist die Messrichtung 90a zugeordnet, dem Punkt d2 die Messrichtung 90b und dem Punkt d3 die Messrichtung 90c. Die Auswahl erfolgt also anhand der Messrichtung 90a-c, die dem jeweiligen map-Punkt entspricht. Einzelscandaten, die zu Messrichtungen gehören, welche nicht herangezogen werden, weil kein entsprechender map-Punkt d1-d3 vorliegt, werden nicht ausgewählt, d.h. nicht in den verkleinerten Scandatensatz übernommen. Die Zuordnung Einzelscandaten - image map-Punkte erfolgt also im Beispiel ohne Berücksichtigung der Entfernung zum jeweiligen Objektoberflächenpunkt Pa-Pc (vgl. Figur 2), welcher mit der jeweiligen Messrichtung 90a-90c verknüpft ist und unabhängig von den mit den Messrichtungen 90a-c verknüpften Messwerten bzw. Punktkoordinaten. Der oder die mit einer jeweiligen Messrichtung 90a-c verknüpfte Messwerte selbst fliessen also nicht in die Erzeugung einer image map 11 ein, sondern werden aufgrund der Zuordnung einem jeweiligen map-Punkt d1-d3 zugeordnet. Weisen die Einzelscandaten jeweils mehr als einen relevanten anzeigbaren Messwert auf, z.B. neben dem Entfernungsmesswert auch ein Rauschmass oder die Intensität der empfangenen Messstrahlung, werden diese als separate image-map-Layer gehandhabt. Die äussere Orientierung der Kamerapixel zum Laser ist bekannt. Daher können die 3D Punkte mit Farbinformation ergänzt werden. Auch diese sind als eigener Layer verfügbar und können dargestellt werden. Die mittels des erfindungsgemässen Verfahrens erstellte cube map 11 erlaubt eine verzerrungsfreie Darstellung.

Als Option wird eine weitere image-map ausgehend vom aufgenommenen Scandatensatz oder eines weiteren daraus abgeleiteten Scandatensatz erzeugt und zusätzlich neben dem verkleinerten Scandatensatz an das externe Gerät übermittelt. Diese weitere image-map weist eine höhere Auflösung auf als die mit verkleinerten Scandatensatz verknüpfte image-map und erlaubt somit eine Darstellung mit einer höheren als der vorbestimmten Auflösung. Allerdings wird mit dieses weiteren image-map zusätzlich nur reine Bildinformation übertragen, keine zusätzlichen Einzelscandaten, weswegen basierend auf dieser image-map durch das externe Gerät keine scandatenbezogen Auswertung oder Bearbeitung erfolgen kann. Vorteilhaft ist, dass die Datengrösse der reinen Bildinformation vergleichsweise gering ist, also eine schnelle Datenübermittlung ermöglicht. Mit dieser zusätzlichen Bildinfo kann z.B. ein Benutzer einen höherauflösenden visuellen Eindruck neben der visuellen Anzeige des verkleinerten Scandatensatzes auf einem Display des externen Geräts erhalten.

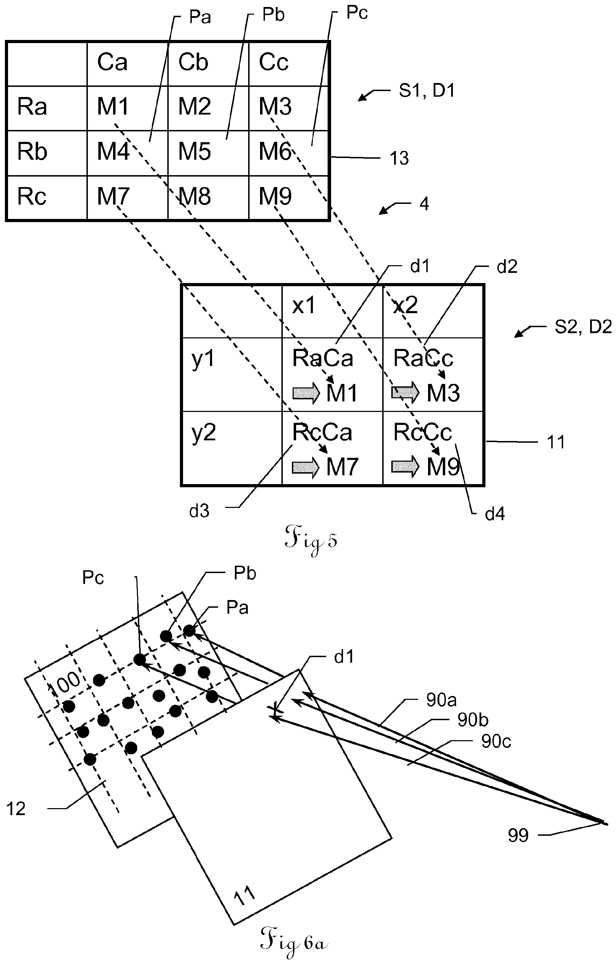

Figur 5 illustriert ein Erstellen eines verkleinerten Scandatensatzes im Falle einer Auswahl mittels Matrix bzw. Tabelle. Figur 5 zeigt zum einen einen als Matrix 13 mit den Zeilen Ra-Rc und den Spalten Ca-Cc ausgebildeten aufgenommenen Scandatensatz S1, in der die Einzelscandaten gemäss des Scanrasters organisiert sind (vgl. Figur 2). In der Matrix 4 sind die Einzelscandaten M1-M9, welche jeweiligen Objektpunkten zugehörig sind (auszugsweise sind die Messpunkte Pa-Pc markiert, vgl. Figur 2). Figur 5 zeigt weiter eine image map 11 in Tabellenform, die in Zeilen- und Spaltenform die map-Punkte d1-d4 organisiert (jedes Feld steht für einen map-Punkt). Die Tabelle 11 weist weniger Felder auf als die Matrix 4, die zweite, von der Anzeigeauslösung (ausgedrückt als Umfang der Tabelle 11) abhängige Scandatendichte ist kleiner als die erste Scandatendichte (Umfang der Matrix 13). Jedem indizierten Anzeigepunkt d1-d4 wird ein Einzelscandatum M1-M9 anhand der Tabelle 11 zugeordnet, wobei jedoch nicht alle Einzelscandaten M1-M9 mit einem map-Punkt d1-d4 verknüpft werden, sondern auswählend, im Beispiel werden die Einzelscandaten M1-M9 jeder zweiten Spalte und Zeile ausgewählt. Beispielsweise wird also das Scandatum M1 dem Punkt d1 mit dem Index x1y1 zugeordnet und das Scandatum M3 dem Punkt d2 mit dem Index x2y1. Das Erstellen 4 eines verkleinerten Scandatensatzes S2 erfolgt im Beispiel also durch die gleichmässige Zuordnung von Einzelscandaten M1-M9 zu image-map-Punkten d1-d4 und die image-map 11 steht für den verkleinerten Scandatensatz S2. Der verkleinerte Scandatensatz S2 weist also die Einzelscandaten M1, M3, M7 und M9 auf, welche ausgewählt sind anhand der image map 11, welche die verkleinerte Scandatendichte vorgibt, so dass die verkleinerte Scandatendichte also abhängig von der Anzeigeauflösung ausgewählt ist. Wird im aufgenommenen Scandatensatz S1 der Scanbereich mit neun Einzelscandaten M1-M9 beschrieben, so wird der gleiche Scanbereich im verkleinerten Scandatensatz S2 mit nur noch vier Einzelscandaten M1, M3, M7 und M9 beschrieben, so dass also eine drastische Verminderung der Daten vorliegt. Der visuelle Eindruck bei der Anzeige des Scans leidet darunter jedoch nicht, da ohnehin nur mit dieser Auflösung angezeigt wird.

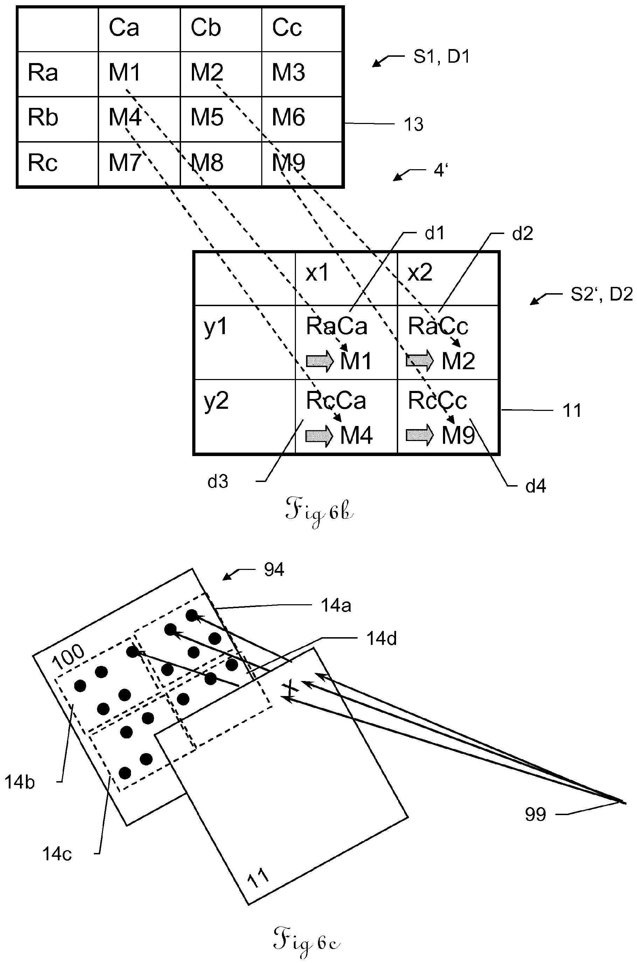

Die Figuren 6a, 6b und 6c zeigen schematisch eine weitere Fortbildung des erfindungsgemässen Verfahrens, wobei rein beispielhaft wie bei Figur 5 erneut die Form einer Matrix 13 und einer Tabelle 11 gewählt ist. Wie im Beispiel nach Figur 5 erfolgt ein Erstellen eines verkleinerten Scandatensatzes S2' mit einer verkleinerten Scandatendichte D2 aus dem aufgenommenen Scandatensatz S1 mit der ersten Scandatendichte D2. Die verkleinerte Scandatendichte D2 ist gleich wie im vorigen Beispiel, d.h. die Anzahl der ausgewählten Einzelscandaten ist die gleiche, allerdings erfolgt im Unterschied zum Beispiel nach Figur 5 die Auswahl nicht simpel regelmässig, sondern anhand von Zusatzkriterien, so dass nicht die Einzelscandaten M1, M3, M7 und M9 ausgewählt sind (vgl. Figur 5), sondern M1, M2, M4 und M9.

Ein Kriterium für diese Art der Auswahl der Einzelscandaten ist, dass im Rahmen des Verfahrens systematische, also reproduzierbare, Gerätefehler berücksichtigt werden. Bei derartigen Fehlern eines Vermessungsgeräts mit Scanfunktionalität handelt es sich vor allem um Achsenfehler oder auch Fehler bedingt durch Latenzzeiten in der Synchronisation zwischen Winkelmessung (zur Bestimmung der Messrichtungen) und Entfernungsmessung. Aufgrund der Reproduzierbarkeit werden diese beim Erstellen des verkleinerten Scandatensatzes (und im Beispiel Erzeugung der image map), so dass die Auswahl der Einzelscandaten (und damit die Darstellung der Scandaten) damit bereits messfehlerkorrigiert erfolgt. Vorzugsweise werden damit Gerätefehler kompensiert, welche Winkelmessungen betreffen, mittels denen die Messrichtungen bestimmt werden. Dabei werden optional die Gerätefehler durch einen Kalibriervorgang individuell für das Vermessungsgerät bestimmt und anhand der dadurch ermittelten Kalibrierparameter bei der Auswahl berücksichtigt. Die Gerätefehler lassen sich dabei im Wesentlichen durch folgende Kalibrierparameter darstellen: Stehachsen-Schiefe, Indexfehler (Winkeloffset) des Vertikal-Winkelsensors, Kollimationsfehler der Ziellinie und Kippachsen-Schiefe. Der Kalibriervorgang und Berücksichtigung der Kalibrierparameter beim Erstellen des verkleinerten Scandatensatzes oder Auswählen der Einzelscandaten erfolgt dabei vor Auslieferung des Vermessungsgeräts werksseitig. Zusätzlich erfolgt optional eine (Nach-)Kalibrierung und Aktualisierung der Kalibrierparameter benutzerseitig, z.B. vor jedem Scanvorgang.

Die in Figur 6b dargestellte Auswahl basiert nach wie vor auf dem ausdünnenden Prinzip der Figur 5 (Auswahl nur jeder zweiten Zeile und Spalte), verfeinert es jedoch, in dem im Unterschied zu Figur 5 eine Gerätefehlerkompensation erfolgt, welche die aufgrund der Berücksichtigung der bekannten Messfehler tatsächlich die am besten zum Anzeigepunkte d1-d4 passenden Einzelscandaten auswählt.

Da die Scandaten in Reihen und Zeilen vorliegen, existiert auch eine gleich grosse Look-up-Table, in welcher der Platz dieses Messpunktes in der verkleinerten Datenmenge vermerkt ist. In der in Figur 6b dargestellten Auswahl zeigt CaRb auf xly2.

In der Figur 6a ist dargestellt, wie aufgrund eines Gerätefehlers, z.B. eines Achsenfehlers die tatsächlich erzielte Verteilung der Messrichtungen 90a-90c und damit die Verteilung der Objektpunkte Pa-PC vom idealen regelmässigen Raster 12 abweicht (vgl. auch Figur 2). Deshalb ist in diesem Fall nicht wie im Idealfall nach Figur 2 die Messrichtung 90b dem map-Punkt d1 am nächsten, sondern die Messrichtung 90c. Deshalb erfolgt die Auswahl zum map-Punkt d1 des Einzelscandatums, welches zum Objektpunkt Pc gehörig ist (und nicht derjenigen zum Objektpunkt Pb gehörigen, wie es ohne Gerätefehler der Fall wäre). Es wird also das Einzelscandatum, das zum Punkt Pc bzw. zur Messrichtung 90c gehörig ist, dem map-Punkt d1 zugeordnet und dieses ausgewählt.

Diese Art der Auswahl ist in Figur 6b dargestellt. Es ist zu sehen, dass z.B. nicht das Einzelscandatum M3 dem map-Punkt d2 zugeordnet und damit ausgewählt wird, wie es ohne Gerätefehler der Fall wäre, sondern das Einzelscandatum M2, und anstelle des Einzelscandatums M7 das Einzelscandatum M4 dem map-Punkt d3 zugeordnet und damit ausgewählt wird. Somit beinhaltet der verkleinerte Scandatensatz S2' bei im Vergleich zum Beispiel nach Figur 5 unveränderter verkleinerter Scandatendichte D2 die Einzelscandaten M2 und M4 anstelle der Einzelscandaten M3 und M7.

Anstelle oder zusätzlich zu einem Auswahlkriterium, welches Gerätefehler kompensiert, wird ein qualitätsbasiertes Auswahlkriterium herangezogen. D.h. es werden beim Erstellen des verkleinerten Scandatensatzes S2' diejenigen Einzelscandaten M1-M9 bevorzugt ausgewählt, welche eine besonders hohe Qualität aufweisen. Hohe Qualität bedeutet z.B., dass die jeweiligen Einzelscandaten Messwerte mit einem besonders guten Signal-Rausch-Verhältnis aufweisen. Dann werden im Beispiel nach Figur 6b die Einzelscandaten M2 und M4 ausgewählt, weil sie eine höhere oder bedeutend höhere Qualität aufweisen als die Einzelscandaten M3 und M7. Diese Vorgehensweise verhindert vorteilhaft, dass besonders gute Scandaten beim Erstellen des verkleinerten Scandatensatzes S2' ausgesondert und nicht in den verkleinerten Scandatensatz S2' übernommen werden und stellt eine Optimierung der Scanqualität dar. Bei einer ersten Scandatendichte, die sehr viel höher ist als die Anzeigeauflösung, ist auch die Objektpunktedichte sehr viel höher als die map-Punktedichte, so dass die Abweichungen z.B. zwischen den Objektpunkten Pc und Pc für ein visuelles Anzeigen praktisch vernachlässigbar sind. Deswegen ist - innerhalb gewisser Grenzen- eine derartige Auswahl anhand von Qualitätskriterien praktisch nicht mit Nachteilen hinsichtlich der Darstellung und Auswertung der Scandaten anhand der Darstellung verbunden.

Figur 6c stellt dar, wie solche Grenzen durch Unterteilung des Scanbereichs in eine Anzahl von Teilbereichen eingehalten werden. Im Beispiel ist der Scanbereich 94 in vier Teilbereiche 14a-14d eingeteilt. Die Anzahl der Teilbereiche 14a-d entspricht dabei der Anzahl der auszuwählenden Einzelscandaten, ist im Beispiel also gleich vier. Die Auswahl erfolgt nun, indem diejenige Einzelscandaten ausgewählt werden, welche innerhalb eines jeweiligen Teilbereichs 14a-14d im Vergleich mit den restlichen Einzelscandaten des jeweiligen Teilbereichs 14a-14d die höchste Qualität aufweisen.

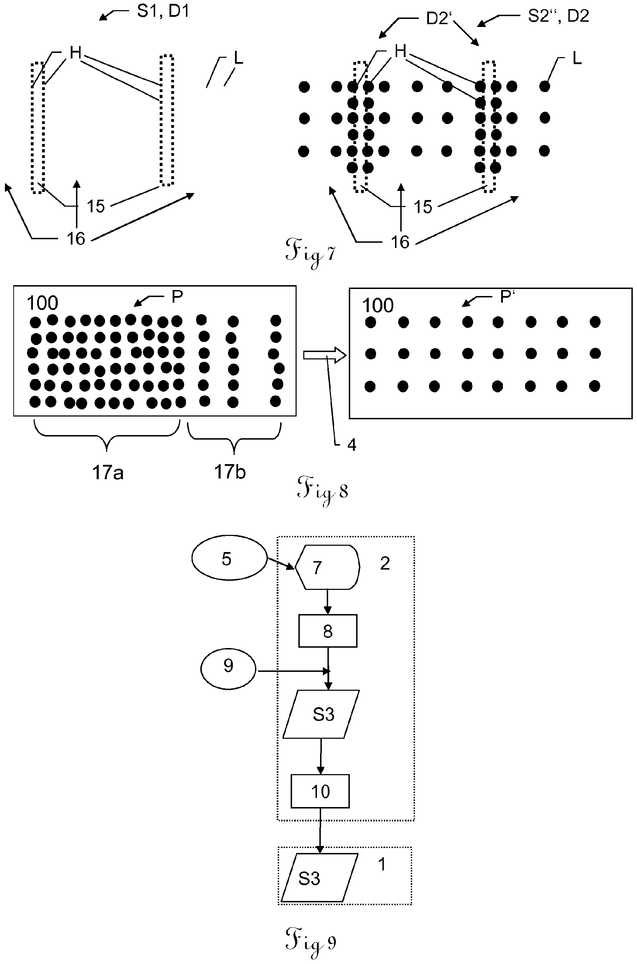

Figur 7 zeigt eine weitere Fortbildung des erfindungsgemässen Verfahrens. Die Fortbildung zeichnet sich durch ein Erstellen des verkleinerten Scandatensatzes S2" aus, bei welchem bei der Auswahl der Einzelscandaten H, L deren Informationsgehalt berücksichtigt wird. In Figur 7 ist schematisch links der aufgenommene Scandatensatz S1 mit der ersten Scandatendichte D1 zu sehen, wobei die Punkte jeweils für Einzelscandaten H, L stehen. Im Scanbereich sind zwei Zonen 15, welche Einzelscandaten H mit besonders hohem Informationsgehalt aufweisen. Diese Zonen 15 ergeben sich z.B. durch stark strukturierte Oberflächen oder Oberflächenkanten, also Teilbereiche des Scanbereichs, welche Übergänge zwischen Zonen 16 mit gleich bleibender Oberfläche darstellen. Während zur gleich bleibende Zonen bzw. Oberflächen 16 sich bereits mit relativ wenigen Punkten bzw. Einzelscandaten beschreiben und visualisieren lassen, sind zur korrekten Beschreibung und Visualisierung von Übergangszonen 15 mehr Punkte bzw. Einzelscandaten H erforderlich. Oder anders formuliert weisen die Einzelscandaten H der Zonen 15 einen vergleichsweise hohen Informationsgehalt auf, so dass diese Einzelscandaten H relativ viel Zugewinn an Oberflächeninformation beitragen, wohingegen die Einzelscandaten L jeweils nur wenig Zugewinn bedeuten, da z.B. die Objektfläche, dies sie beschreiben, im Idealfall durch bereits drei solcher Einzelscandaten ausreichend bekannt ist. Die Fortbildung gemäss Figur 7 stellt also eine "intelligente" Auswahl von Einzelscandaten H, L dar, welche eine Verminderung der Scandatenmenge ermöglicht und dabei hochrelevante Information jedenfalls beibehält.

Deshalb wird in dieser Fortbildung des Verfahrens bei der Auswahl der Einzelscandaten H, L deren jeweiliger Informationsgehalt ermittelt, z.B. durch ein Kanten- oder feature-point-Detektionsalgorithmus, und berücksichtigt. Die Berücksichtigung erfolgt indem Einzelscandaten H mit hohem Informationsgehalt in jedem Fall ausgewählt werden und nicht bei der Auswahl "aussortiert" werden, auch wenn z.B. dadurch eine ungleichmässige Verteilung der Einzelscandaten des verkleinerten Scandatensatzes entsteht. Dabei wird optional ein Schwellwert für den Informationsgehalt definiert, der angibt, ab welchem Informationsgehalt die entsprechenden Einzelscandaten H jedenfalls zu übernehmen sind. Das Erstellen des verkleinerte Scandatensatzes S2" erfolgt dabei dergestalt, dass die verkleinerte Scandatendichte D2 den Wert annimmt, den sie auch ohne Berücksichtigung des Informationsgehalts hätte (d.h. die Gesamtzahl der Einzelscandaten des verkleinerten Scandatensatzes S2" bleibt unverändert, so dass für die wegen des hohen Informationsgehalts übernommenen Einzelscandaten H zusätzliche geringwertige Einzelscandaten L aussortiert werden).

Alternativ werden -wie in Figur 7 rechts dargestellt- alle hochwertigen Einzelscandaten H zusätzlich übernommen, so dass sich in den Bereichen 15 hohen Informationsgehalts ein bereichsweise erhöhte Scandatendichte D2' ergibt, welche höher ist als die Scandatendichte der restlichen Bereiche. Somit weist der verkleinerte Scandatensatz S2" Bereiche 15 mit erhöhter Scandatendichte D2' auf. Das visuelle Anzeigen des verkleinerten Scandatensatzes S2" erfolgt dann optional mit zunächst einer Anzeigeauflösung, welcher der "globalen" Scandatendichte D2 entspricht, wobei die regional erhöhte Scandatendichte D2' ein höher auflösendes Zoomen in die hochstrukturierten Bereiche 15 erlaubt.

Figur 8 zeigt eine weitere Fortbildung des erfindungsgemässen Verfahrens. In dieser Fortbildung wird das Ausdünnen des aufgenommenen Scandatensatzes, genutzt, um eine unregelmässige Verteilung der aufgenommenen Objektpunkt P der Objektoberfläche 100 zu korrigieren. Unregelmässige Punktverteilungen entstehen beim Scannen beispielsweise durch die bereits genannten Gerätefehler, welche eine Abweichung vom idealen Raster bewirken (siehe Punktbereich 17a). Zudem entstehen Ungleichmässigkeiten auch unabhängig von etwaigen Fehlern beispielsweise auch dadurch, dass der Abstand der Objektoberflächen 100 zum Messbezugspunkt unterschiedlich ist. Beim gleichmässigen Ändern der Messrichtung ist der Abstand der Objektpunkte P zueinander bei nahen Oberflächen 100 geringer als bei Oberflächen 100, die weiter entfernt vom Vermessungsgerät sind (eine gleichmässige Scandatendichte würde nur für eine kugelförmige Messumgebung erzielt werden). D.h. die aufgenommene Punktdichte ist im Nahbereich höher als im Fernbereich (symbolisiert durch den Punktbereich 17b). Erfindungsgemäss erfolgt das Erstellen 4 des verkleinerten Scandatensatzes in dieser Fortbildung ausgleichend, indem die Auswahl der Einzelscandaten dergestalt erfolgt, dass der verkleinerte Scandatensatz S2" eine gleichmässige Verteilung der ausgedünnten Punkte P' aufweist (alternativ zu einer völligen Gleichmässigkeit wird abweichend zur Darstellung in Figur 8 zumindest eine gleichmässigere Verteilung bewirkt). Beispielsweise wird hierzu bei der Auswahl der Einzelscandaten der Abstand der Objektpunkt P zueinander oder der Entfernungsmesswert, also der Abstand des jeweiligen aufgenommenen Objektpunkts P zum Vermessungsgerät, berücksichtigt und die Scandatendichte bei hoher Punktdichte oder von Punkten im Nahbereich stärker erniedrigt als bei niedriger Punktdichte oder von Punkten im Fernbereich. Optional erfolgt dabei eine Glättung der Punktdichte bereichsweise, so dass der verkleinerte Scandatensatz Bereiche mit unterschiedlicher und jeweils gleichmässiger Punktdichte aufweist.

Figur 9 zeigt eine weitere Weiterbildung des erfindungsgemässen Verfahrens. Dargestellt ist schematisch das Anzeigen 7 mit der Anzeigeauflösung 5 des verkleinerten Scandatensatzes auf dem externen Datenverarbeitungsgerät 2 (vgl. Figur 3). In der Weiterbildung erfolgt nun ein Bearbeiten 8 des verkleinerten Scandatensatzes, woraus ein bearbeiteter Scandatensatz S3 resultiert. Das Bearbeiten erfolgt dabei automatisch durch eine Recheneinheit des Datenverarbeitungsgeräts 2, z.B. durch ein automatisiertes Auswerten, oder manuell anhand der visuellen Darstellung durch einen Benutzer, und vorzugsweise zeitnah, d.h. noch während des Scannens oder unmittelbar anschliessend an das Scannen oder sehr bald danach. Das Bearbeiten oder Auswerten erfolgt z.B. hinsichtlich einer Kontrolle des Scandatensatzes auf Fehler oder Vollständigkeit und/oder Auswertung der Scandaten (z.B. Ermittlung von Punktabständen) und/oder durch Einfügen von Metadaten, wobei es sich bei den Metadaten beispielsweise um Ergebnisse der Auswertung handelt (Flächenberechnungen oder Abstandsberechnungen) oder Texte, Bilder, CAD-Daten oder Voice-Memos. Alternativ oder zusätzlich umfasst das Bearbeiten der Scandaten ein Ermitteln von Bereichen besonderer Bedeutung (Regions of Interest ROI). Solche Bereiche sind vor allem besonders relevante oder strukturreiche Objektoberflächen. Optional erfolgt dann zeitnah ein zusätzliches Aufnehmen von Objektoberflächen dieser ROI mit dem Vermessungsgerät, so dass der erste oder zweite Scandatensatz ergänzt wird, wobei unter Ergänzen nicht nur ein Einfügen von Scandaten in einen vorhandenen Scandatensatz verstanden wird, sondern auch, dass ein komplett neuer Scandatensatz erstellt wird. Vorzugsweise erfolgt das weitere Aufnehmen dabei mit einer dritten, erhöhten Scandatendichte, so dass z.B. strukturreiche Oberflächen (z.B. Kanten, Ecken etc) mit erhöhtem Detailgrad vorliegen im Vergleich zum ursprünglichen Scan. Dabei erfolgt die Angabe der dritte Scandatendichte z.B. durch Vergleich mit der ersten Scandatendichte, welche als Metadatum und Teil des verkleinerten Scandatensatzes mit übermittelt worden ist. Das erfindungsgemäss ermöglichte rasche und zeitnahe Auswerten bzw. Bearbeiten der Scandaten ermöglicht also ein Verbessern des Scanergebnisses zeitnah und mit wesentlich weniger Aufwand als Verfahren des Stands der Technik, insbesondere dadurch, dass sich das Vermessungsgerät bzw. dessen Benutzer durch das rasche und dennoch hinreichend genaue Bearbeiten oder Auswerten noch vor Ort befindet, und so weitere ergänzende oder korrigierende Scans durchführen kann.

Optional erfolgt anschliessend an ein Bearbeiten ein Rückübermitteln 10 des bearbeiteten Scandatensatzes S3 (vollständig oder teilweise, z.B. nur die im Vergleich zum verkleinerten Scandatensatz veränderten Anteile) vom externen Datenverarbeitungsgerät 2 an das Vermessungsgerät 1. Dort wird der bearbeitete Scandatensatz S3 verwendet, um den dort gespeicherten (aufgenommenen oder verkleinerten) Scandatensatz zu ergänzen oder anzupassen, wobei unter anpassen auch ein Ersetzen zu verstehen ist. Somit liegt auf einem Speicher des Vermessungsgeräts 1 ein vom Datenverarbeitungsgerät bearbeiteter Scandatensatz S3 vor. Da das erfindungsgemässe Verfahren vorzugsweise zeitnah im Anschluss oder bereits während des Scans erfolgt, ist somit ermöglicht, dass ein Benutzer, der sich noch mit dem Vermessungsgerät 1 im Feld befindet, noch vor Ort Rückmeldungen und/oder Anweisungen zu den Scanergebnissen erhält. Damit kann vorteilhaft ggf. ein "sofortiges" Vervollständigen, Ergänzen oder Verbessern der Scanergebnisse erfolgen.

Das Bearbeiten und die Kontrolle der Scandaten kann alternativ auch an einem anderen Ort geschehen, von welchem dann die Rückmeldung kommt.

Optional erfolgt nicht nur ein Übermitteln eines verkleinerten Scandatensatzes S2 (vgl. Figur 3), sondern mehrerer nach dem Prinzip der Figur 3 erstellter verkleinerter Scandatensätze, welche von mehreren benachbarten Scanorten aufgenommen sind, welche sich überlappende Scanbereiche aufweisen. Diese verschiedenen Scandatensätze weisen also Einzelscandaten auf, wovon jeweils ein Teil sich auf unterschiedliche und ein Teil sich auf gleiche Objektoberflächen bezieht. Das Bearbeiten 8 umfasst dann in dieser Fortbildung (auch) ein Verknüpfen dieser "benachbarten" verkleinerten Scandatensätze, indem diese zueinander grob ausgerichtet (registriert) werden. Das Verknüpfen erfolgt entweder manuell mittels der visuellen Darstellung 7, z.B. indem der Benutzer angezeigte Überlappungsbereiche oder identische features oder Punkte auf dem Display markiert, oder automatisch durch einen entsprechenden Algorithmus, der im Datenverarbeitungsgerät vorliegt, wobei vorzugsweise zusätzliche Positionsinformationen herangezogen werden. Solche zusätzlichen Positionsinformationen sind z.B. mittels Positionssensoren des Vermessungsgeräts am jeweiligen Scanort ermittelt, z.B. mittels GPS, IMU, Videotracking und/oder Kompass. Vorzugsweise erfolgt nach dem Grobausrichten eine Kontrolle durch einen Benutzer, wozu das Ergebnis des Grobausrichtens angezeigt wird. Werden Fehler beim Verknüpfen manuell oder automatisch festgestellt, wird vorzugsweise eine entsprechende Information an das Vermessungsgerät übermittelt, z.B. indem ein oder mehrere Scandatensätze oder Teile davon rückübermittelt werden, in denen mangelhafte oder fehlende Überlappungsbereiche markiert sind. Die verkleinerten bearbeiteten Scandatensätze können zudem, z.B. als ein einziger vereinigter bearbeiteter Scandatensatz, an das Vermessungsgerät rückübermittelt werden und eine Kontrolle ggf. durch einen Benutzer vor Ort erfolgen.

## Patentansprüche

1. Verfahren zum Verarbeiten von Scandaten, wobei im Rahmen des Verfahrens
• ein Aufnehmen (3) eines ersten, aufgenommenen Scandatensatzes (S1) mit einem, insbesondere stationären, Vermessungsgerät (1) mit Scanfunktionalität, insbesondere einem Laserscanner oder einer Totalstation, über einen definierten Objektoberflächen-Scanbereich (94) erfolgt, insbesondere wobei der Scanbereich (94) in der Horizontalen 360° und in der Vertikalen etwa 270° umfasst, wobei
□ der aufgenommene Scandatensatz (S1) eine erste Anzahl von Einzelscandaten (M1-M9, H, L) mit einer ersten Scandatendichte (D1) aufweist und
□ die Einzelscandaten (M1-M9, H, L) jeweils auf einen Punkt einer Objektoberfläche bezogen sind,
• ein Erstellen (4) eines verkleinerten Scandatensatzes (S2, S2', S2'') mit einer zweiten, verkleinerten Anzahl von Einzelscandaten (M1-M9, H, L) erfolgt, indem von einer Steuer- und Auswerteeinheit des Vermessungsgeräts (1) eine Auswahl aus der ersten Anzahl von Einzelscandaten (M1-M9, H, L) des aufgenommenen Scandatensatzes (S1) getroffen wird, wobei
□ die Auswahl als Anpassung an eine vorbestimmte zweite, verkleinerte Scandatendichte (D2), welche niedriger ist als die erste Scandatendichte (D1), erfolgt und
□ die verkleinerte Scandatendichte (D2) abhängig ist von einer vorbestimmten Anzeigeauflösung (5) zur visuellen Anzeige (7) von Scandaten,
• ein, insbesondere drahtloses, Übermitteln (6) des verkleinerten Scandatensatzes (S2, S2', S2'') vom Vermessungsgerät (1) an ein externes Datenverarbeitungsgerät (2) erfolgt, und
• ein visuelles Anzeigen (7) des verkleinerten Scandatensatzes oder Teilen davon auf einem Display (3) des externen Datenverarbeitungsgeräts (2) mit der vorbestimmten Anzeigeauflösung (5) oder einer daraus abgeleiteten Anzeigeauflösung erfolgt.

2. Verfahren nach Anspruch 1,
**dadurch gekennzeichnet, dass**
im Rahmen des Verfahrens
• ein Bearbeiten des übermittelten verkleinerten Scandatensatzes (S2, S2', S2'') mittels des externen Datenverarbeitungsgeräts (2) erfolgt, so dass sich ein bearbeiteter Scandatensatz (S3) ergibt, insbesondere wobei im Rahmen des Bearbeitens ein Einfügen von Metadaten erfolgt, wobei es sich im Speziellen bei den Metadaten um Texte, Bilder, Voice-Memos, CAD-Daten, Punktkoordinaten oder eine aus wenigstens zwei Einzelmessdaten abgeleitete Grösse, insbesondere eine Länge, Fläche oder ein Volumen, handelt,
• ein, insbesondere drahtloses, Rückübermitteln (10) zumindest der bearbeiteten, insbesondere veränderten oder ergänzten, Teile des bearbeiteten Scandatensatzes (S3) an das Vermessungsgerät (1) erfolgt, und
• ein Ergänzen oder Anpassen des in einem Speicher des Vermessungsgeräts (1) vorgehaltenen aufgenommenen oder verkleinerten Scandatensatzes (S1, S2, S2', S2'') anhand des rückübermittelten bearbeiteten Scandatensatzes (S3) oder seiner rückübermittelten Teile erfolgt,
insbesondere wobei
• der rückübermittelte bearbeitete Scandatensatz (S3) oder seine rückübermittelten Teile bei der Darstellung von Scandaten durch eine Anzeigeeinheit des Vermessungsgeräts (1) berücksichtigt wird, insbesondere indem eingefügte Metadaten zusammen mit den Einzelscandaten (M1-M9, H, L) angezeigt werden, und/oder
• das Bearbeiten simultan auf mehreren externen Datenverarbeitungsgeräten (2) erfolgt.

3. Verfahren nach Anspruch 1 oder 2,
**dadurch gekennzeichnet, dass**
• ein Übermitteln (6) von wenigstens zwei unterschiedlichen Scandatensätzen mit sich überlappenden Scanbereichen (94) erfolgt,
• mittels des Datenverarbeitungsgeräts (2) ein Verknüpfen, insbesondere Grobausrichten zueinander, der Scandatensätze erfolgt,
insbesondere wobei
• das Verknüpfen manuell anhand der visuellen Anzeige (7), insbesondere durch Markieren von Anzeigepunkten (d1-d4) und/oder Anzeigebereichen auf einer darstellenden Anzeigeeinheit, erfolgt und/oder
• das Verknüpfen automatisch durch Heranziehung zusätzlicher Positionsdaten erfolgt, welche von einem Positionsmesser, insbesondere einer IMU, GPS-Empfänger und/oder Videotracker, des Vermessungsgeräts (1) bereitgestellt sind, und/oder
• anschliessend eine, insbesondere der visuellen Kontrolle dienende, visuelle Anzeige (7) der verknüpften Scandatensätze auf einem Display (3) erfolgt.

4. Verfahren nach einem der vorherigen Ansprüche,
**dadurch gekennzeichnet, dass**
das externe Datenverarbeitungsgerät (2) ausgebildet ist als
• handhaltbares Gerät, insbesondere Feldrechner, Tablet oder Smartphone, und sich das handhaltbare Gerät bei der Durchführung des Verfahrens vor Ort befindet, insbesondere wobei Datenübermittlung zwischen dem Vermessungsgerät (1) und dem externen Gerät mittels WiFi, WLAN und/oder Bluetooth erfolgt, und/oder
• Office-Rechner, welcher sich räumlich getrennt vom Vermessungsgerät (1) befindet, insbesondere wobei für die Datenübermittlung zwischen dem Vermessungsgerät (1) und dem Office-Rechner ein Feldrechner, Tablet oder Smartphone als Relaisstation zwischengeschaltet ist,
insbesondere wobei vom externen Datenverarbeitungsgerät (2) Steuersignale an das Vermessungsgerät übermittelt werden, wobei im Speziellen eine vollständige Fernsteuerung des Vermessungsgeräts (1) durch das externe Datenverarbeitungsgerät (2) erfolgt.

5. Verfahren nach einem der vorherigen Ansprüche,
**dadurch gekennzeichnet, dass**
die verkleinerte Anzahl von Einzelscandaten (M1-M9, H, L)
• gleich der Anzahl der Pixel der vorbestimmten Anzeigeauflösung (5) ist und/oder
• höchstens die Hälfte, insbesondere höchstens ein Viertel, im Speziellen höchstens ein Zehntel, der ersten Anzahl beträgt.

6. Verfahren nach einem der vorherigen Ansprüche,
**dadurch gekennzeichnet, dass**
das Anzeigen (7)
• als Panoramadarstellung, insbesondere Würfeldarstellung, erfolgt und/oder
• mittels einer mit dem verkleinerten Scandatensatz verknüpften image map (11), insbesondere einer cube map, mit einer von einer vorbestimmten Anzeigeauflösung (5) abhängigen Anzahl von map-Punkten (d1-d4) erfolgt, insbesondere wobei die image map (11) erzeugt wird, indem mittels einer Zuordnungsvorschrift eine Zuordnung der ausgewählten Einzelscandaten (M1-M9, H, L) zu einem map-Punkt (d1-d4) erfolgt, wobei die verkleinerte Anzahl von Einzelscandaten (M1-M9, H, L) der Anzahl der map-Punkte (d1-d4) entspricht, wobei im Speziellen
□ die Zuordnung unmittelbar anhand jeweiliger mit den jeweiligen Einzelscandaten (M1-M9, H, L) verknüpfter Scanrichtungen erfolgt und/oder
□ die Zuordnung als Look-Up-Tabelle (11) ausgebildet ist, in der für die jeweiligen map-Punkte (d1-d4) direkt die jeweiligen Einzelscandaten (M1-M9, H, L) abrufbar sind.

7. Verfahren nach einem der vorherigen Ansprüche,
**dadurch gekennzeichnet, dass**
bei der Auswahl von Einzelscandaten (M1-M9, H, L) systematische Gerätefehler, insbesondere Achsenfehler, des Vermessungsgeräts (1) berücksichtigt sind, so dass der verkleinerte Scandatensatz gerätefehlerkorrigiert, insbesondere weitgehend gerätefehlerfrei, ist, insbesondere wobei die systematischen Gerätefehler
• für das Vermessungsgerät (1) individuell mittels eines Kalibriervorgangs in Form von Kalibrierparametern bestimmt sind und die Gerätefehler bei der Auswahl anhand der Kalibrierparameter berücksichtigt werden und/oder
• Winkelmessungen zur Bestimmung von Messrichtungen (90a-c) betreffen.

8. Verfahren nach einem der vorherigen Ansprüche,
**dadurch gekennzeichnet, dass**
bei der Auswahl von Einzelscandaten (M1-M9, H, L) Qualitätskriterien berücksichtigt werden, so dass Einzelscandaten (M1-M9, H, L) mit einer vergleichsweise hohen Qualität, insbesondere Einzelscandaten (M1-M9, H, L) mit Messwerten mit einem vergleichsweise guten Signal-Rausch-Verhältnis, bevorzugt ausgewählt werden, insbesondere indem
• der Scanbereich (94) in eine Anzahl von Teilbereiche (14a-d) aufgeteilt wird, wobei die Anzahl der Teilbereiche der verkleinerten Anzahl der Einzelscandaten (M1-M9, H, L) entspricht und
• jeweils diejenigen Einzelscandaten (M1-M9, H, L) ausgewählt werden, welche innerhalb jeweiliger Teilbereiche (14a-d) im Vergleich mit den weiteren Einzelscandaten (M1-M9, H, L) der jeweiligen Teilbereiche (14a-d) die höchste Qualität aufweisen.

9. Verfahren nach einem der vorherigen Ansprüche,
**dadurch gekennzeichnet, dass**
bei der Auswahl der Einzelscandaten (M1-M9, H, L) ein Informationsgehalt der jeweiligen Einzelscandaten (M1-M9, H, L) berücksichtigt wird, insbesondere indem
• Einzelscandaten (M1-M9, H, L) mit hohem Informationsgehalt, insbesondere oberhalb eines definierten Informationsgehaltschwellenwerts, in jedem Fall in den verkleinerten Scandatensatz übernommen werden und/oder
• eine Unterscheidung von Bereichen hinsichtlich des Informationsgehaltes der Einzelscandaten (M1-M9, H, L) des jeweiligen Bereichs erfolgt und die Auswahl von Einzelscandaten (M1-M9, H, L) dergestalt erfolgt, dass die verkleinerte Scandatendichte (D2) in Bereichen (15) mit hohem Informationsgehalt vergleichsweise hoch ist, insbesondere unverändert gleich der ersten Scandatendichte (D1) ist, und in Bereichen mit niedrigem Informationsgehalt vergleichsweise niedrig ist.

10. Verfahren nach einem der vorherigen Ansprüche,
**dadurch gekennzeichnet, dass**
das Erstellen (4) des verkleinerten Scandatensatzes (S2, S2', S2'') und dessen Übermitteln (6) zeitnah an das Aufnehmen (3) erfolgt, insbesondere unmittelbar nach Abschluss der Aufnahme des aufgenommenen Scandatensatzes (S1) oder in Echtzeit bereits während der Aufnahme für bereits aufgenommene Scandaten.

11. Verfahren nach einem der vorherigen Ansprüche,
**dadurch gekennzeichnet, dass**
die Auswahl der Einzelscandaten (M1-M9, H, L) glättend erfolgt, so dass eine ungleichmässige Verteilung der Punkte (98, Pa-Pc) der Objektoberfläche (100) korrigiert wird, insbesondere indem bei der Auswahl ein Abstand der zu den jeweiligen Einzelscandaten (M1-M9, H, L) gehörigen Punkte (98, Pa-Pc) zueinander berücksichtigt wird.

12. Verfahren nach einem der vorherigen Ansprüche,
**dadurch gekennzeichnet, dass**
anhand des übermittelten verkleinerten Scandatensatzes (S2, S2', S2'') und mittels des externen Datenverarbeitungsgeräts (2) eine zeitnahe Auswertung des Scandatensatzes erfolgt, insbesondere wobei
• eine Kontrolle auf Vollständigkeit und/oder Fehler, wobei bei Vorliegen von Unvollständigkeit und/oder Fehlerhaftigkeit ein zeitnahes Ergänzen und/oder Ausbessern des aufgenommenen oder verkleinerten Scandatensatzes durch ein weiteres Aufnehmen (3) von Einzelscandaten (M1-M9, H, L) mit dem Vermessungsgerät (1) erfolgt, und/oder
• Regions of Interest ermittelt werden und zeitnah ein Ergänzen des aufgenommenen oder verkleinerten Scandatensatzes durch ein weiteres Aufnehmen (3) mit dem Vermessungsgerät (1) von Einzelscandaten (M1-M9, H, L) von Objektoberflächen der Regions of Interest mit einer dritten, erhöhten Scandatendichte (D2') erfolgt.

13. Verfahren nach einem der vorherigen Ansprüche,
**dadurch gekennzeichnet, dass**
neben dem verkleinerten Scandatensatz (S2, S2', S2'') zusätzliche scandatenbezogene Bildinformation, insbesondere eine den aufgenommenen Scandatensatz (S1) abbildende image map (11), vom Vermessungsgerät (1) erstellt und an das externe Datenverarbeitungsgerät (2) übermittelt werden, wobei die scandatenbezogene Bildinformation zur visuellen Anzeige (7) mit einer Anzeigeauflösung dient, die höher ist als die vorbestimmte Anzeigeauflösung (5).

14. Computerprogrammprodukt, das auf einem maschinenlesbaren Träger gespeichert ist, oder Computer-Datensignal, verkörpert durch eine elektromagnetische Welle, mit Programmcode, der geeignet ist zur Durchführung des Verfahrens nach einem der Ansprüche 1 bis 13.

15. Vermessungssystem mit einem Vermessungsgerät (1) mit Scanfunktionalität und einem zum Vermessungsgerät (1) externen Datenverarbeitungsgerät (2), insbesondere mit einem als Laserscanner oder Totalstation ausgebildeten Vermessungsgerät (1),
**dadurch gekennzeichnet, dass**
das Vermessungssystem zur Ausführung des Verfahrens nach einem der Ansprüche 1 bis 13 ausgebildet ist.

## Claims

1. Method for processing scan data, wherein, within the scope of the method,
• there is recording of a first, recorded scan data record by a measuring device, in particular a stationary measuring device, with a scan functionality, in particular a laser scanner or total station, over a defined object surface scan region, in particular wherein the scan region encompasses 360° in the horizontal direction and approximately 270° in the vertical direction, wherein
□ the recorded scan data record comprises a first number of individual scan data points with a first scan data density and
□ the individual scan data points are respectively related to a point on an object surface,
• there is a creation of a reduced scan data record with a second, reduced number of individual scan data points by virtue of a control and evaluation unit of the measuring device making a selection from the first number of individual scan data points of the recorded scan data record, wherein
□ the selection is carried out as an adaptation to a predetermined second, reduced scan data density, which is lower than the first scan data density, and
□ the reduced scan data density is dependent on a predetermined display resolution for visually displaying scan data,
• there is a transmission, in particular a wireless transmission, of the reduced scan data record from the measuring device to an external data processing device, and
• there is a visual display of the reduced scan data record or of parts thereof on a display of the external data processing device with the predetermined display resolution or with a display resolution derived therefrom.

2. Method according to Claim 1,
**characterized in that**,
within the scope of the method,
• there is processing of the transmitted reduced scan data record by means of the external data processing device such that a processed scan data record emerges, in particular wherein there is an insertion of metadata within the scope of the processing, wherein, specifically, the metadata are texts, images, voice memos, CAD data, point coordinates or a variable derived from at least two individual measurement data points, in particular a length, area or a volume,
• there is a return transmission, in particular a wireless return transmission, of at least the processed parts, in particular the modified or complemented parts, of the processed scan data record to the measuring device, and
• there is complementing or adapting of the recorded or reduced scan data record, which is kept available in a memory of the measuring device, on the basis of the return-transmitted processed scan data record or the return-transmitted parts thereof,
in particular wherein
• the return-transmitted processed scan data record or the return-transmitted parts thereof are taken into account when representing scan data by a display unit of the measuring device, in particular by virtue of inserted metadata being displayed together with the individual scan data points, and/or
• there is simultaneous processing on a plurality of external data processing devices.

3. Method according to Claim 1 or 2,
**characterized in that**
• there is a transmission of at least two different scan data records with overlapping scan regions,
• there is linking of the scan data records, in particular an approximate alignment of these in relation to one another, by means of the data processing device,
in particular wherein
• there is manual linking on the basis of the visual display, in particular by marking display points and/or display regions on a presenting display unit, and/or
• there is automatic linking by using additional position data which are provided by a position measuring device, in particular an IMU, GPS receiver and/or video tracker, of the measuring device, and/or
• there subsequently is a visual display, in particular a visual display that serves for visual control, of the linked scan data records on a display.

4. Method according to any one of the preceding claims,
**characterized in that**
the external data processing device is embodied as
• a portable device, in particular a field computer, tablet or smartphone, and the portable device is in situ when carrying out the method, in particular wherein data transmission between the measuring device and the external device is effectuated by means of Wi-Fi, WLAN and/or Bluetooth, and/or
• an office computer which is spatially separate from the measuring device, in particular wherein a field computer, tablet or smartphone is interposed as a relay station between the measuring device and the office computer for the data transmission between the measuring device and the office computer,
in particular wherein control signals are transmitted from the external data processing device to the measuring device, wherein, specifically, there is complete remote control of the measuring device by the external data processing device.

5. Method according to any one of the preceding claims,
**characterized in that**
the reduced number of individual scan data points
• equals the number of pixels of the predetermined display resolution and/or
• is at most one half, in particular at most one quarter, specifically at most one tenth, of the first number.

6. Method according to any one of the preceding claims,
**characterized in that**
the display
• is effectuated as a panorama view, in particular as a cube view, and/or
• is effectuated by means of an image map that is linked to the reduced scan data record, in particular a cube map, with a number of map points that depends on a predetermined display resolution, in particular wherein the image map is produced by virtue of mapping of the selected individual scan data points to a map point being carried out by means of an assignment prescription, wherein the reduced number of individual scan data points corresponds to the number of map points, wherein, specifically,
□ the assignment is effectuated directly on the basis of respective scan directions that are linked to the respective individual scan data points and/or
□ the assignment is embodied as a lookup table, in which the respective individual scan data points are recallable directly for the respective map points.

7. Method according to any one of the preceding claims,
**characterized in that**
systematic device faults, in particular axis errors, of the measuring device (1) are taken into account when selecting individual scan data points such that the reduced scan data record is device fault corrected, in particular largely device fault free, in particular wherein the systematic device faults
• are determined individually for the measuring device (1) by means of a calibration process in the form of calibration parameters and the device faults are taken into account during the selection process on the basis of the calibration parameters and/or
• relate to angle measurements for determining measurement directions.

8. Method according to any one of the preceding claims,
**characterized in that**
quality criteria are taken into account when selecting individual scan data points such that individual scan data points with a comparatively high quality, in particular individual scan data points with measurement values having a comparatively good signal-to-noise ratio, are preferably selected, in particular by virtue of
• the scan region being subdivided into a number of portions, wherein the number of portions corresponds to the reduced number of individual scan data points, and
• respectively those individual scan data points which, within respective portions, have the highest quality in comparison with the further individual scan data points of the respective portions being selected.

9. Method according to any one of the preceding claims,
**characterized in that**
an information content of the respective individual scan data points is taken into account when selecting the individual scan data points, in particular by virtue of
• individual scan data points with a high information content, in particular above a defined information content threshold, being adopted in the reduced scan data record in any case and/or
• making a distinction between regions in respect of the information content of the individual scan data points in the respective region and selecting individual scan data points in such a way that the reduced scan data density in regions with a high information content is comparatively high, in particular, devoid of any change, the same as the first scan data density, and comparatively low in regions with a low information content.

10. Method according to any one of the preceding claims,
**characterized in that**
the creation of the reduced scan data record and the transmission thereof is effectuated in a timely manner in relation to the recording, in particular directly after the completion of the recording of the recorded scan data record or in real time, already during the recording, for already recorded scan data.

11. Method according to any one of the preceding claims,
**characterized in that**
the individual scan data points are selected in a smoothing manner such that an irregular distribution of the points on the object surface is corrected, in particular by virtue of a distance between the points belonging to the respective individual scan data points being taken into account within the scope of the selection.

12. Method according to any one of the preceding claims,
**characterized in that**
there is a timely evaluation of the scan data record on the basis of the transmitted reduced scan data record and by means of the external data processing device, in particular wherein
• there is checking for completeness and/or errors, wherein, if there is incompleteness and/or there are errors, the recorded or reduced scan data record is complemented and/or corrected in a timely manner by way of a further recording of individual scan data points using the measuring device, and/or
• regions of interest are ascertained and the recorded or reduced scan data record is complemented in a timely manner by a further recording of individual scan data points of object surfaces of the regions of interest with a third, increased scan data density using the measuring device.

13. Method according to any one of the preceding claims,
**characterized in that**,
in addition to the reduced scan data record, additional scan data related image information, in particular an image map that images the recorded scan data record, are created by the measuring device and transmitted to the external data processing device, wherein the scan data related image information serves for the visual display with a display resolution that is higher than the predetermined display resolution.

14. Computer program product which is stored on a machine readable medium, or computer data signal, embodied by an electromagnetic wave, comprising program code that is suitable for carrying out the method according to any one of Claims 1 to 13.

15. Measuring system comprising a measuring device with a scan functionality and a data processing device that is external to the measuring device, in particular comprising a measuring device that is embodied as a laser scanner or total station,
**characterized in that**
the measuring system is embodied to carry out the method according to any one of Claims 1 to 13.

## Revendications

1. Procédé pour traiter des données de balayage, cependant que, dans le cadre du procédé,
• un enregistrement (3) d'un premier jeu de données enregistrées (S1) avec un appareil de mesure (1), en particulier stationnaire, avec une fonctionnalité de balayage, en particulier un scanner laser ou une station totale, est réalisé sur une zone de balayage définie de surface d'objet (94), en particulier cependant que la zone de balayage (94) comprend 360° dans l'horizontale et environ 270° dans la verticale, cependant que
· le jeu de données enregistrées (S1) présente un premier nombre de données de balayage individuelles (M1-M9, H, L) avec une première densité de données de balayage (D1) et
· les données de balayage individuelles (M1-M9, H, L) se réfèrent respectivement à un point d'une surface d'objet,
• une création (4) d'un jeu de données de balayage réduit (S2, S2', S2") est réalisée avec un second nombre réduit de données de balayage individuelles (M1-M9, H, L), cependant qu'une sélection est faite par une unité de commande et d'évaluation de l'appareil de mesure (1) à partir du premier nombre de données de balayage individuelles (M1-M9, H, L) du jeu de données enregistrées (S1), cependant que
· la sélection est réalisée comme adaptation à une seconde densité réduite prédéfinie de données de balayage (D2) qui est plus faible que la première densité de données de balayage (D1) et
· la densité réduite de données de balayage (D2) dépend d'une résolution d'affichage prédéfinie (5) pour l'affichage visuel (7) de données de balayage,
• une transmission, en particulier sans fil (6), du jeu de données de balayage réduit (S2, S2', S2") de l'appareil de mesure (1) à un appareil externe de traitement de données (2) et
• un affichage visuel (7) du jeu de données de balayage réduit ou de parties de celui-ci sur un écran (3) de l'appareil externe de traitement de données (2) avec la résolution d'affichage prédéfinie (5) ou une résolution d'affichage dérivée de celle-ci.

2. Procédé selon la revendication 1, **caractérisé en ce que**, dans le cadre du procédé,
• un traitement du jeu de données de balayage transmis (S2, S2', S2") est réalisé au moyen de l'appareil externe de traitement de données (2) si bien que l'on obtient un jeu de données de balayage traitées (S3), en particulier cependant qu'une insertion de métadonnées est réalisée dans le cadre du traitement, cependant qu'il s'agit pour les métadonnées en particulier de textes, d'images, de mémos vocaux, de données de CAO, de coordonnées de points ou d'une dimension dérivée d'au moins deux données de mesure individuelles, en particulier une longueur, une surface ou un volume,
• une transmission en retour, en particulier sans fil (10), au moins des parties traitées, en particulier modifiées ou complétées, du jeu de données de balayage traitées (S3) et
• une complétion ou adaptation du jeu de données de balayage enregistré ou réduit (S2, S2', S2") stocké dans une mémoire de l'appareil de mesure (1) est réalisée à l'aide du jeu de données de balayage traitées transmises en retour (S3) ou de ses parties transmises en retour,
en particulier cependant
• qu'il est tenu compte du jeu de données de balayage traitées transmises en retour (S3) ou ses parties transmises en retour lors de la représentation de données de balayage par une unité d'affichage de l'appareil de mesure (1), en particulier cependant que des métadonnées insérées sont affichées avec les données de balayage individuelles (M1-M9, H, L) et/ou
• le traitement se fait de manière simultanée sur plusieurs appareils externes de traitement de données (2).

3. Procédé selon la revendication 1 ou 2, **caractérisé en ce**
• **qu'**il est réalisé une transmission (6) d'au moins deux jeux de données de balayage différents avec des zones de balayage qui se chevauchent (94),
• **qu'**il est réalisé une concaténation, en particulier un alignement grossier, des jeux de données de balayage au moyen de l'appareil de traitement de données (2),
en particulier cependant que
• la concaténation est réalisée manuellement à l'aide de l'affichage visuel (7), en particulier par le marquage des points d'affichage (d1-d4) et/ou de zones d'affichage sur une unité d'affichage qui représente et/ou
• la concaténation est réalisée automatiquement en utilisant des données de position supplémentaires qui sont mises à disposition par un mesureur de position, en particulier par un récepteur IMU, GPS et/ou un vidéo traceur, de l'appareil de mesure (1) et/ou
• **qu'**ensuite un affichage visuel (7), en particulier qui sert au contrôle visuel, des jeux de données de balayage concaténés est réalisé sur un écran (3).

4. Procédé selon l'une des revendications précédentes, **caractérisé en ce que** l'appareil externe de traitement de données (2) est configuré comme
• un appareil portable, en particulier un terminal de terrain, une tablette ou un smartphone, et que l'appareil portable se trouve sur placer lors de l'exécution du procédé, en particulier cependant que la transmission de données entre l'appareil de mesure (1) et l'appareil externe se fait au moyen de Wifi, WLAN et/ou Bluetooth et/ou
• comme ordinateur de bureau qui se trouve séparé spatialement de l'appareil de mesure (1), en particulier cependant qu'un terminal de terrain, une tablette ou un smartphone est intercalé comme station relais pour la transmission de données entre l'appareil de mesure (1) et l'ordinateur de bureau,
en particulier cependant que des signaux de commande sont transmis par l'appareil externe de traitement de données (2) à l'appareil de mesure, cependant qu'en particulier une télécommande complète de l'appareil de mesure (1) est réalisée par l'appareil externe de traitement de données (2).

5. Procédé selon l'une des revendications précédentes, **caractérisé en ce que** le nombre réduit de données de balayage individuelles (M1-M9, H, L)
• est égal au nombre de pixels de la résolution d'affichage prédéfinie (5) et/ou
• est d'au maximum la moitié, en particulier d'au maximum un quart, tout spécialement d'au maximum un dixième, du premier nombre.

6. Procédé selon l'une des revendications précédentes, **caractérisé en ce que** l'affichage (7)
• est réalisé comme représentation panoramique, en particulier représentation en cube et/ou
• est réalisé au moyen d'une carte d'image (11) associée au jeu de données de balayage réduit, en particulier d'une carte de cube, avec un nombre de points de carte (d1-d4) qui dépend d'une résolution d'affichage prédéfinie (5), en particulier cependant que la carte d'image (11) est produite cependant qu'une affectation des données de balayage individuelles (M1-M9, H, L) sélectionnées à un point d'image (d1-d4) est réalisée au moyen d'une règle d'affectation, cependant que le nombre réduit des données de balayage individuelles (M1-M9, H, L) correspond au nombre des points de carte (d1-d4), cependant qu'en particulier
· l'affectation est réalisée au directement à l'aide de directions de balayage associées aux données de balayage individuelles respectives (M1-M9, H, L) et/ou
· l'affectation est configurée comme table de consultation (11) dans laquelle les données de balayage individuelles respectives (M1-M9, H, L) sont consultables directement pour les points de carte respectifs (d1-d4).

7. Procédé selon l'une des revendications précédentes, **caractérisé en ce qu'**il est tenu compte, lors de la sélection de données de balayage individuelles (M1-M9, H, L), d'erreurs d'appareil systématiques, en particulier de défauts d'axe de l'appareil de mesure (1), si bien que le jeu de données de balayage réduit est corrigé quant aux erreurs d'appareil, en particulier est sensiblement exempt d'erreurs d'appareil, en particulier cependant que les erreurs d'appareil systématiques
• sont déterminées pour l'appareil de mesure (1) de manière individuelle au moyen d'un processus de calibration sous forme de paramètres de calibration et qu'il est tenu compte des erreurs d'appareil lors de la sélection à l'aide des paramètres de calibration et/ou
• concernent des mesures d'angles pour déterminer des directions de mesure (90a-c).

8. Procédé selon l'une des revendications précédentes, **caractérisé en ce qu'**il est tenu compte, lors de la sélection de données de balayage individuelles (M1-M9, H, L), de critères de qualité si bien que des données de balayage individuelles (M1-M9, H, L) avec une qualité comparativement élevée sont sélectionnées de manière préférentielle, en particulier des données de balayage individuelles (M1-M9, H, L) avec des valeurs de mesure avec un rapport signal/bruit comparativement bon, en particulier cependant que
• la zone de balayage (94) est répartie en un nombre de zones partielles (14ad), cependant que le nombre des zones partielles correspond au nombre réduit des données de balayage individuelles (M1-M9, H, L) et
• que les données de balayage individuelles (M1-M9, H, L) qui présentent la meilleure qualité au sein des zones partielles (14a-d) par comparaison avec les autres données de balayage individuelles (M1-M9, H, L) des zones partielles respectives (14a-d) sont sélectionnées.

9. Procédé selon l'une des revendications précédentes, **caractérisé en ce qu'**il est tenu compte, lors de la sélection de données de balayage individuelles (M1-M9, H, L), d'un contenu informatif des données de balayage individuelles respectives (M1-M9, H, L), en particulier cependant que
• des données de balayage individuelles (M1-M9, H, L) avec un contenu informatif élevé, en particulier au-dessus d'un seuil de contenu informatif défini, sont intégrés dans tous les cas dans le jeu de données de balayage réduit et/ou
• qu'une différenciation de zones pour ce qui est du contenu informatif des données de balayage individuelles (M1-M9, H, L) de la zone respective est réalisée et que la sélection de données de balayage individuelles (M1-M9, H, L) est réalisée de telle manière que la densité réduite des données de balayage (D2) est comparativement élevée dans des zones (15) avec un contenu informatif élevé et est comparativement faible dans des zones avec un faible contenu informatif.

10. Procédé selon l'une des revendications précédentes, **caractérisé en ce que** la création (4) du jeu de données de balayage réduit (S2, S2', S2") et sa transmission (6) sont effectuées rapidement après l'enregistrement (3), en particulier directement après l'achèvement de l'enregistrement du jeu de données enregistrées (S1) ou en temps réel déjà pendant l'enregistrement pour des données de balayage déjà enregistrées.

11. Procédé selon l'une des revendications précédentes, **caractérisé en ce que** la sélection de données de balayage individuelles (M1-M9, H, L) est réalisée de manière lissante si bien qu'une répartition irrégulière des points (98, Pa-Pc) de la surface d'objet (100) est corrigée, en particulier cependant qu'il est tenu compte, lors de la sélection, d'une distance des points (98, Pa-Pc) faisant partie des données de balayage individuelles respectives (M1-M9, H, L) les uns par rapport aux autres.

12. Procédé selon l'une des revendications précédentes, **caractérisé en ce qu'**une exploitation rapide du jeu de données de balayage est effectuée à l'aide du jeu de données de balayage réduit transmis (S2, S2', S2") et au moyen de l'appareil externe de traitement de données (2), en particulier cependant
• qu'un contrôle du caractère complet et/ou des erreurs, cependant qu'en présence de caractère incomplet et/ou d'erreurs, une complétion rapide et/ou une réparation du jeu de données de balayage enregistré ou réduit est réalisée par un enregistrement supplémentaire (3) de données de balayage individuelles (M1-M9, H, L) avec l'appareil de mesure (1) et/ou
• des régions d'intérêt sont déterminées et il est réalisé rapidement une complétion du jeu de données de balayage enregistré ou réduit par un enregistrement supplémentaire (3) avec l'appareil de mesure (1) de données de balayage individuelles (M1-M9, H, L) de surfaces d'objet des régions d'intérêt avec une troisième densité accrue des données de balayage (D2').

13. Procédé selon l'une des revendications précédentes, **caractérisé en ce que** des informations d'image supplémentaires relatives aux données de balayage, en particulier une carte d'image (11) qui représente le jeu de données de balayage enregistré (S1), est réalisée par l'appareil de mesure (1) en plus du jeu de données de balayage réduit (S2, S2', S2") et transmise à l'appareil externe de traitement de données (2), cependant que les informations d'image relatives aux données de balayage servent à l'affichage visuel (7) avec une résolution d'affichage qui est plus élevée que la résolution d'affichage prédéterminée (5).

14. Produit programme d'ordinateur qui est mémorisé sur un support lisible par machine ou signal de données d'ordinateur, représenté par une onde électromagnétique avec un code de programme qui est approprié pour l'exécution du procédé selon l'une des revendications 1 à 13.

15. Système de mesure avec un appareil de mesure (1) avec une fonctionnalité de balayage et un appareil externe de traitement de données (2) par rapport à l'appareil de mesure (1), en particulier avec un appareil de mesure (1) configuré en particulier comme un scanner laser ou une station totale, **caractérisé en ce que** le système de mesure est configuré pour la réalisation du procédé selon l'une des revendications 1 à 13.
